(19) Europäisches Patentamt
European Patent Office
Office européen des brevets

(11) EP 4 484 110 A1

(12) **EUROPEAN PATENT APPLICATION**
published in accordance with Art. 153(4) EPC

(43) Date of publication:
**01.01.2025 Bulletin 2025/01**

(21) Application number: **23760189.3**

(22) Date of filing: **27.02.2023**

(51) International Patent Classification (IPC):
***B29C 39/02*** *(2006.01)* ***B29C 39/24*** *(2006.01)*
***B29C 39/26*** *(2006.01)* ***G02C 7/00*** *(2006.01)*
***C08G 18/38*** *(2006.01)* ***B29C 33/38*** *(2006.01)*
***G02B 1/04*** *(2006.01)* ***G02B 3/00*** *(2006.01)*

(52) Cooperative Patent Classification (CPC):
**B29C 33/38; B29C 39/02; B29C 39/24; B29C 39/26; C08G 18/38; G02B 1/04; G02B 3/00; G02C 7/00**

(86) International application number:
**PCT/JP2023/007165**

(87) International publication number:
**WO 2023/163191 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.02.2022 JP 2022028598**
**28.07.2022 JP 2022120906**

(71) Applicant: **Mitsui Chemicals, Inc.**
**Tokyo 104-0028 (JP)**

(72) Inventors:
- **KASORI, Yuki**
  **Omuta-shi, Fukuoka 836-8610 (JP)**
- **SUESUGI, Kouji**
  **Omuta-shi, Fukuoka 836-8610 (JP)**
- **MATSUI, Yusuke**
  **Omuta-shi, Fukuoka 836-8610 (JP)**
- **TORII, Tadashi**
  **Omuta-shi, Fukuoka 836-8610 (JP)**

(74) Representative: **Mewburn Ellis LLP**
**Aurora Building**
**Counterslip**
**Bristol BS1 6BX (GB)**

(54) **OPTICAL MEMBER PRODUCTION METHOD AND OPTICAL MEMBER**

(57) A method of producing an optical member includes: a space formation step of bonding a film to outer peripheral faces of a mold substrate and a resin substrate that are arranged to face each other with a predetermined spacing therebetween, thereby forming a space enclosed by the mold substrate, the resin substrate, and the film; an injection step of injecting a polymerizable composition into the space; and a curing step of curing the polymerizable composition injected into the space, thereby obtaining a cured material. The film satisfies at least one of the following conditions: (i) in a case in which the film is bonded to the resin substrate and subjected to a heat-resistance index test at 50°C for 3 minutes, the film does not detach from the resin substrate, and (ii) in a case in which the film is bonded to the resin substrate and subjected to a heat-resistance index test at 50°C for 3 minutes, the film exhibits a stretch ratio of more than 0%.

FIG.1

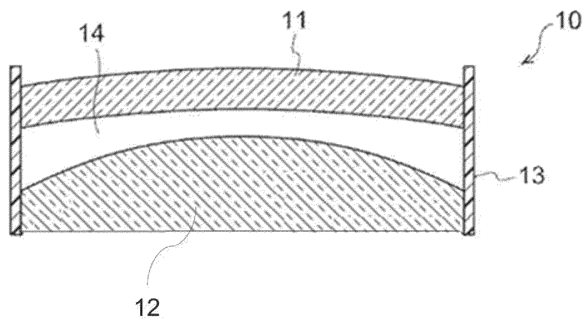


EP 4 484 110 A1

## Description

### Technical Field

The present disclosure relates to a method of producing an optical member and an optical member.

### Background Art

Examples of methods of producing resins for use in optical materials for plastic lenses include a cast-molding polymerization method in which a polymerizable composition containing a monomer is injected into a mold and cured by heating.

In the cast-molding polymerization method, a polymerizable composition is prepared and degassed, the polymerizable composition is then poured into a mold, curing by heating (polymerization reaction) is carried out, the product is thereafter taken out of the mold (mold release) and annealed, thereby obtaining an optical material (for example, a lens or a semi-finished blank).

Patent Document 1, for example, describes a tape for producing a plastic lens, for use in a mode in which the tape is bonded to the outer peripheral faces of two substantially circular mold substrates, which face each other, to define a space between the two mold substrates for producing a plastic lens formed from a polymerizable composition, wherein the tape for producing a plastic lens is formed by layering a base material and a pressure-sensitive adhesive layer, the tape has a heat-resistance index of more than 0 mm and less than 10 mm, and the tape has a maximum tensile load of from 50 N/10 mm to 100 N/10 mm as measured in accordance with JIS Z0237.

Patent Document 2, for example, describes a method of producing a plastic spectacle lens including: a mold substrate assembly step of wrapping a pressure-sensitive adhesive tape around the side faces of two mold substrates, which are disposed to face each other with a predetermined spacing therebetween, to immobilize these mold substrates with the pressure-sensitive adhesive tape and thereby form a cavity for allowing lens molding that is surrounded by the two mold substrates and the pressure-sensitive adhesive tape; an injection step of injecting a polymerizable composition into the cavity; and a curing step of curing the polymerizable composition to obtain a plastic lens, wherein the holding force of the pressure-sensitive adhesive tape according to JIS Z0237 is at least 10 mm or dropping, and in the curing step, one or both of the two mold substrates slides on the inner face of the pressure-sensitive adhesive tape from the position(s) at which the mold substrate(s) have been immobilized in the mold substrate assembly step, thereby narrowing the distance between the mold substrates.

Patent Document 3, for example, describes a method of producing a plastic spectacle lens including: a mold substrate assembly step of wrapping a pressure-sensitive adhesive tape around the side faces of two mold substrates, which are disposed to face each other with a predetermined spacing therebetween, to immobilize these mold substrates with the pressure-sensitive adhesive tape and thereby form a cavity for allowing lens molding that is surrounded by the two mold substrates and the pressure-sensitive adhesive tape; an injection step of injecting a polymerizable composition into the cavity; and a curing step of curing the polymerizable composition to obtain a plastic lens, wherein the pressure-sensitive adhesive tape has a structure in which a pressure-sensitive adhesive layer is provided on a tape base material, and the gradient of the elastic modulus of the tape base material in the direction orthogonal to the tape face of the tape base material is 10 N/mm or less.

Patent Document 4, for example, describes a method of producing a plastic lens including: a mold substrate assembly step of wrapping a pressure-sensitive adhesive tape around the side faces of two mold substrates, which are disposed to face each other with a predetermined spacing therebetween, to immobilize these mold substrates with the pressure-sensitive adhesive tape and thereby form a cavity for allowing lens molding that is surrounded by the two mold substrates and the pressure-sensitive adhesive tape; an injection step of injecting a polymerizable composition into the cavity; and a curing step of curing the polymerizable composition to obtain a plastic lens, wherein in the curing step, one or both of the two mold substrates slides on the inner face of the pressure-sensitive adhesive tape from the position(s) at which ths mold substrate(s) have been immobilized in the mold substrate assembly step, thereby narrowing the distance between the mold substrates.

Patent Document 1: Japanese Patent Application Laid-Open (JP-A) No. 2019-162848
Patent Document 2: JP-ANo. 2012-196933
Patent Document 3: JP-ANo. 2012-196934
Patent Document 4: JP-ANo. 2002-248636

## SUMMARY OF INVENTION

### Problem to be Solved by Invention

In cases in which optical members are produced by curing polymerizable compositions, cured materials immediately after curing are often in a state of, for example, having a non-uniform thickness.

Therefore, the cured materials immediately after curing do not have quality sufficient for use as optical members. In conventional practice, grinding or the like has been performed in order to uniformize the thickness and ensure quality.

However, in order to achieve a desired size of an optical member, it is necessary to take the later-performed grinding into account, and set the size of the cured material before grinding to be larger than the desired size. In addition, shavings generated during grinding are disposed of as waste in many cases.

Cured materials immediately after curing have a large prismaticity in many cases.

As used herein, prismaticity represents thickness unevenness in a cured material. For example, the presence of a large difference between a thicker part and a thinner part in a cured material means a large prismaticity.

It is also common for cured materials having a large prismaticity, which do not have sufficient quality as optical members, to be subjected to grinding.

In view of the above, a method of producing an optical member is desired by which an optical member having reduced prismaticity can be produced with no or only a small amount of grinding for prism correction.

A problem to be solved by one embodiment of the present disclosure is to provide a method of producing an optical member whereby an optical member having reduced prismaticity can be produced, and the optical member.

### Means for Solving the Problem

Specific means for solving the problem include the following aspects.

<1> A method of producing an optical member, including:

a space formation step of bonding a film to outer peripheral faces of a mold substrate and a resin substrate that are arranged to face each other with a predetermined spacing therebetween, thereby forming a space enclosed by the mold substrate, the resin substrate, and the film;
an injection step of injecting a polymerizable composition into the space; and
a curing step of curing the polymerizable composition injected into the space, thereby obtaining a cured material, wherein the film satisfies at least one of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

<2> The method of producing an optical member according to <1>, wherein the film satisfies both of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

<3> The method of producing an optical member according to <1> or <2>, wherein, in a case in which a glass ball tack test is performed at 80°C using the film, a glass ball movement distance is 200 mm or less.
<4> The method of producing an optical member according to any one of <1> to <3>, wherein the polymerizable composition includes a polymerization catalyst and two or more different monomers for an optical material, the content of the polymerization catalyst is from 0.01 parts by mass to 0.1 parts by mass with respect to a total of 100 parts by mass of the two or more different monomers for an optical material, and the polymerizable composition has a viscosity of from 30 mPa's to 1000 mPa·s as measured by a B-type viscometer under conditions of 25°C and 60 rpm.
<5> The method of producing an optical member according to <4>, wherein the polymerizable composition includes at least one selected from the group consisting of a photochromic compound, an alcohol compound, and a visible light-absorbing dye.
<6> The method of producing an optical member according to <4> or <5>, wherein the two or more different monomers

for an optical material include an isocyanate compound and an active hydrogen compound that is at least one selected from the group consisting of a polythiol compound containing two or more mercapto groups, a hydroxythiol compound containing one or more mercapto groups and one or more hydroxy groups, a polyol compound containing two or more hydroxy groups, and an amine compound.

<7> An optical member, including:

a first layer and a second layer, wherein:

the average thickness of the second layer is greater than the average thickness of the first layer,
the first layer contains a photochromic compound, an alcohol compound, and a visible light-absorbing dye, and
the optical member has a prism difference of 0.25 mm or less, and no stria having a length of 1.0 mm or more is present in a region within a radius of 15 mm from the center of the optical member.

<8> The optical member according to <7>, wherein the second layer has a stepped shape at a part of an outer periphery of the second layer.

<9> The optical member according to <7> or <8>, wherein a value H1, which is a value obtained by dividing the haze of the first layer by the thickness of the first layer, is higher than a value H2, which is a value obtained by dividing the haze of the second layer by the thickness of the second layer, at the center of the optical material.

<10> The optical member according to <9>, wherein the ratio of the value H1 to the value H2 is from 1.001 to 1.500.

<11> A method of producing an optical member, including:

a space formation step of bonding a film to outer peripheral faces of a pair of mold substrates that are arranged to face each other with a predetermined spacing therebetween, thereby forming a space enclosed by the pair of mold substrates and the film;
an injection step of injecting a polymerizable composition into the space; and
a curing step of curing the polymerizable composition injected into the space, thereby obtaining a cured material, wherein the ratio of the heat-resistance index of the film measured under conditions of 30°C and 30 minutes to the heat-resistance index of the film measured under conditions of 20°C and 30 minutes is more than 0.1, and the degree of polymerization of the polymerizable composition is 15% or more if the curing step is carried out at 30°C.

<12> The method of producing an optical member according to <11>, wherein the degree of polymerization of the polymerizable composition is 75% or less if the curing step is carried out at 30°C.

<13> The method of producing an optical member according to <11> or <12>, wherein the film includes a pressure-sensitive adhesive layer, and the degree of polymerization of the polymerizable composition is 30% or more if the curing step is carried out at a leaching temperature of the pressure-sensitive adhesive layer.

<14> The method of producing an optical member according to any one of <11> to <13>, wherein the polymerizable composition includes a polymerization catalyst and two or more different monomers for an optical material, the content of the polymerization catalyst is from 0.015 parts by mass to 0.080 parts by mass with respect to a total of 100 parts by mass of the two or more different monomers for an optical material, and the polymerizable composition has a viscosity of from 10 mPa's to 200 mPa·s as measured by a B-type viscometer under conditions of 25°C and 60 rpm.

<15> The method of producing an optical member according to <14>, wherein the two or more different monomers for an optical material include at least one active hydrogen compound selected from the group consisting of a polythiol compound containing two or more mercapto groups, a hydroxythiol compound containing one or more mercapto groups and one or more hydroxy groups, a polyol compound containing two or more hydroxy groups, and an amine compound.

<16> The method of producing an optical member according to <14> or <15>, wherein the two or more different monomers for an optical material include an isocyanate compound, and the isocyanate compound includes at least one selected from the group consisting of isophorone diisocyanate, 2,5-bis(isocyanatomethyl)bicyclo-[2.2.1]-heptane, 2,6-bis(isocyanatomethyl)bicyclo-[2.2.1]-heptane, m-xylylene diisocyanate, 2,4-tolylene diisocyanate, 2,6-tolylene diisocyanate, dicyclohexylmethane diisocyanate, 1,3-bis(isocyanatomethyl)cyclohexane, 1,4-bis(isocyanatomethyl)cyclohexane, 1,6-hexamethylene diisocyanate, and 1,5-pentamethylene diisocyanate.

<17> The method of producing an optical member according to any one of <14> to <16>, wherein the polymerization catalyst includes at least one selected from the group consisting of an amine-based catalyst and an organotin-based catalyst.

## Advantageous Effects of Invention

According to one embodiment of the present disclosure, a method of producing an optical member whereby an optical member having reduced prismaticity can be produced, and the optical member can be provided.

BRIEF DESCRIPTION OF DRAWINGS

FIG. 1 is a schematic diagram for explaining the space formation step.
FIG. 2 is a schematic diagram for explaining the injection step.
FIG. 3 is a schematic diagram for explaining the space formation step.
FIG. 4 is a schematic diagram for explaining the injection step.

MODES FOR CARRYING OUT THE INVENTION

In the present disclosure, a numerical range specified using "to" means a range that includes the numerical values written before and after "to" as the lower and upper limits.
In the present disclosure, in a case in which there are two or more substances corresponding to a particular component in a composition, the amount of the component in the composition means the total amount of the two or more substances present in the composition, unless indicated otherwise.
For numerical ranges described in a stepwise manner in the present disclosure, the upper limit value or the lower limit value of one numerical range may be replaced with the upper limit value or the lower limit value of another numerical range in the stepwise description. The upper limit value or the lower limit value of any numerical range described in the present disclosure may also be replaced with a value described in an Example.
In the present disclosure, the scope of the term "step" encompasses not only an independent step but also a step that is cannot be clearly distinguished from another step, as long as the intended purpose of the step of interest is achieved.
In the present disclosure, the term "film" refers to a concept that includes materials that are generally referred to as sheets, tapes, layered films, pressure-sensitive adhesive films, and the like.
The present disclosure encompasses the first and second embodiments described below.
Hereinafter, the first embodiment and the second embodiment will be described in detail.

<<Method of Producing Optical Member>>

The method of producing an optical member according to the first embodiment includes:

a space formation step of bonding a film to outer peripheral faces of a mold substrate and a resin substrate that are arranged to face each other with a predetermined spacing therebetween, thereby forming a space enclosed by the mold substrate, the resin substrate, and the film;
an injection step of injecting a polymerizable composition into the space; and
a curing step of curing the polymerizable composition injected into the space, thereby obtaining a cured material,
wherein the film satisfies at least one of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

The method of producing an optical member according to the first embodiment includes a space formation step of bonding a film to outer peripheral faces of a mold substrate and a resin substrate that are arranged to face each other with a predetermined spacing therebetween, thereby forming a space enclosed by the mold substrate, the resin substrate, and the film.
Usually, in production of a lens, a polymerizable composition is injected into a gap between two mold substrates that are disposed to face each other with a predetermined spacing therebetween, and the polymerizable composition is cured. The cured material after curing can be used as a lens material (this method is also referred to as the "single casting method").
In the first embodiment, for example, a polymerizable composition containing a compound such as a photochromic compound may be injected into a gap between the mold substrate and the lens material obtained above (corresponding to the resin substrate in the first embodiment), and the polymerizable composition may be cured. After curing, a cured material is obtained which is formed of a layer containing, for example, the photochromic compound and a layer of the above-described lens material that are layered one on the other (this method is also referred to as the "double casting method").
In other words, the method of producing an optical member according to the first embodiment is a method that is

suitably used in the case of an optical material obtained by a method including multiple rounds of casting (for example, the double casting method) (i.e., a layered body in which layers are disposed one on another).

Here, cured materials obtained by the single casting method and cured materials obtained by the double casting method often have a non-uniform thickness.

In the case of using only the single casting method, the non-uniformity of the thickness can be eliminated simply by grinding thick parts. It will be noted that the grinding needs to be performed generally from the eye side (also referred to as the "back side") rather than from the side at which an object to be watched is present (also referred to as the "front side").

However, since the cured material obtained by the double casting method is a layered body having stacked layers, it is difficult to grind, from the back side, a layer that is disposed at the front side. Therefore, it is difficult to eliminate the non-uniformity of the thickness of a layer that is disposed at the front side.

As an example, a case will be described in which: a film is bonded to outer peripheral faces of two mold substrates that are arranged to face each other with a predetermined spacing therebetween, thereby forming a space enclosed by the two mold substrates and the film; and then a polymerizable composition is injected into the space; and then the polymerizable composition is cured. In this case, a part of the film bonded to the outer peripheral faces overlaps with another part of the film. When a polymerizable composition is polymerized and cured, it is usually preferable that the polymerizable composition undergoes polymerization shrinkage, and that the distance between the molds decreases uniformly.

However, the strength of the film increases in the above-described overlapping portion, which inhibits the distance between the molds from decreasing during polymerization and shrinkage of the polymerizable composition.

As a result, the thickness of the cured material at a region at or around the overlapping portion becomes greater than the thickness of the cured material at a region at or around the other portionss than the overlapping portion. As a result, the thickness of the cured material as a whole becomes uneven.

The method of producing an optical member according to the first embodiment is capable of solving the above-described problem.

The method of producing an optical member according to the first embodiment is capable of producing an optical member having reduced prismaticity, due to the method including the above-described features.

In addition, the method of producing an optical member according to the first embodiment is capable of producing an optical member having reduced prismaticity with no or only a small amount of grinding for prism correction.

There are cases in which a pressure-sensitive adhesive in the film leaches into the polymerizable composition. The pressure-sensitive adhesive that has leached into the polymerizable composition may cause white cloudiness, void, or the like in the resultant cured material.

The method of producing an optical member according to the first embodiment is also capable of favorably reducing such white cloudiness, void, and the like, due to the method including a combination of features described above.

The curing time in the curing step in the first embodiment is particularly preferably 20 hours or less, since the above-described wrinkles, white cloudiness, void, and the like can be more favorably reduced when the curing time is within the above range.

<Space Formation Step>

The space formation step is a step of bonding a film to outer peripheral faces of a mold substrate and a resin substrate that are arranged to face each other with a predetermined spacing therebetween, thereby forming a space enclosed by the mold substrate, the resin substrate, and the film.

An example of the space formation step will be explained using FIG. 1. FIG. 1 is a schematic diagram for explaining the space formation step.

First, as shown in FIG. 1, a lens cast-molding polymerization mold 10 is prepared. For example, a mold substrate 11 for convex face formation that is made of glass, and a resin substrate 12 for concave face formation are prepared. The outer diameters of the mold substrate 11 and the resin substrate 12 may be the same as the finished outer diameter of the plastic lens.

The resin substrate 12 may be an SF lens (semi-finished lens) produced in advance by the single casting method.

In a state in which the mold substrate 11 and the resin substrate 12 are arranged to face each other with a predetermined spacing therebetween, a film (for example, pressure-sensitive pressure-sensitive adhesive tape) 13 is wrapped around the outer peripheral faces of the mold substrate 11 and the resin substrate 12 slightly more than one revolution to affix the mold substrate 11 and the resin substrate 12 with the pressure-sensitive adhesive tape and enclose the gap between the mold substrate 11 and the resin substrate 12. This results in the formation of a space enclosed by the mold substrate, the resin substrate, and the film (i.e., cavity 14 for molding a lens). The film 13 may be a removable or thermally-removable pressure-sensitive adhesive tape.

The method of producing an optical member according to the first embodiment uses a mold substrate and a resin substrate.

The mold in the first embodiment (also referred to as "mold for producing an optical member") is preferably a mold configured to produce an optical member through a process including: bonding a film to outer peripheral faces of a mold substrate and a resin substrate that are arranged to face each other with a predetermined spacing therebetween, thereby forming a space enclosed by the mold substrate, the resin substrate, and the film; placing a polymerizable composition in the space; and curing the polymerizable composition to obtain a cured material.
The main face of the mold in the first embodiment preferably has an approximate diameter of from 60 cm to 80 cm.
As described above, use of the method of producing an optical member according to the first embodiment enables production of an optical member having reduced prismaticity with no or only a small amount of grinding.
Therefore, the approximate diameters of the main faces of the mold and the resin substrate can be reduced by a degree corresponding to the elimination or reduction of grinding.
The resin substrate in the first embodiment is a substrate formed with a resin.
The resin substrate may be, for example, an optical element such as a lens, or a semi-finished lens. In other words, the optical member obtained by the method of producing an optical member according to the first embodiment may include a layer of a semi-finished lens and a layer of the cured material of the polymerizable composition described in the first embodiment.
In this case, the resin substrate is, for example, preferably a cured material of a polymerizable composition containing the below-described two or more different monomers for an optical material and the below-described polymerization catalyst.

<Film>

The method of producing an optical member according to the first embodiment uses the film according to the first embodiment (also referred to as "film for producing an optical member").
The film according to the first embodiment is preferably a film for producing an optical member, for in the production of an optical member through a process including: bonding the film to a mold substrate and a resin substrate that are arranged to face eath other with a predetermined spacing therebetween, thereby forming a space enclosed by the mold substrate, the resin substrate, and the film; placing a polymerizable composition in the space; and curing the polymerizable composition to obtain a cured material.
The film according to the first embodiment satisfies at least one of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

The film according to the first embodiment preferably includes at least a base material layer and a pressure-sensitive adhesive layer.
The film according to the first embodiment may be formed of a single layer that is a base material layer, or may be a layered body in which a base material layer and a pressure-sensitive adhesive layer are layered.
The film according to the first embodiment has a high level of pressure-sensitive adhesive force around a temperature (around 25°C) at which operations such as the forming of a space enclosed by a mold substrate, a resin substrate, and a film or injecting of a polymerizable composition into the above-described space are performed. The morphology of the space can be maintained thereby.
Meanwhile, at a temperature that is higher than room temperature at which the polymerizable composition is polymerized, the film becomes more stretchable or the mold becomes more slidable on the film . Accordingly, polymerization shrinkage resulting from the polymerization of the polymerizable composition can be accepted by narrowing the spacing between the mold substrate and the resin substrate in the above-described space.
As a result, in particular, occurrence of prismaticity caused by a difference in hardness between a portion at which parts of the film overlap with each other and a portion at which the film has no overlap.

[Heat-Resistance Index Test]

It is preferable that the film according to the first embodiment does not detach from the resin substrate in a case in which the film is bonded to the resin substrate and subjected to a heat-resistance index test at 50°C for 3 minutes.
The heat-resistance index test can measure the static pressure-sensitive adhesive force of the film.
If the film according to the first embodiment does not detach from the resin substrate in a case in which the film is bonded to the resin substrate and subjected to a heat-resistance index test at 50°C for 3 minutes, static pressure-sensitive adhesive force can be adjusted to a favorable value.

In a case in which the film according to the first embodiment is bonded to the resin substrateand subjected to a heat-resistance indext test at 50°C, the film may detach from the resin substrate when 20 minutes or less have elapsed in the heat-resistance index test, or may detach from the resin substrate when 10 minutes or less have elapsed in the heat-resistance index test.

If the film according to the first embodiment detaches from the resin substrate within the above-described period, the leakage of the polymerizable composition from the space can be suppressed when the polymerizable composition is injected.

The specific method of the heat-resistance index test is as follows.

(Method)

At room temperature, a portion having an area of 55 $mm^2 \pm 10$ $mm^2$ in the exposed surface of the pressure-sensitive adhesive layer of the film having a width of 20 mm $\pm$ 0.5 mm and a length of 150 mm $\pm$ 0.5 mm is brought into close contact with a resin substrate and pressure-bonded at a load of 1 $kg/cm^2$. A 1 kg weight is attached to the end of a folded portion of the film that is not in close contact with the resin substrate, and the resultant is placed in a constant temperature vessel maintained at a temperature of 50°C such that the resin substrate is oriented in the vertical direction. Three minutes after the placement in the constant temperature vessel, it is checked whether or not the film (i.e., tape) has entirely detached from the resin substrate . In a case in which the film has not entirely detached, the checking is continued thereafter to determine the point of time at which the film (i.e., tape) entirely detaches from the resin substrate.

The expression, "does not detach from the resin substrate in the case of being bonded to the resin substrate and subjected to a heat-resistance index test at 50°C for 3 minutes", means that the film adheres to the resin substrate at least at a part in a case in which the film is bonded to the resin substrate and subjected to a heat-resistance index test at 50°C and 3 minutes has elapsed in the heat-resistance index test.

The expression, "entirely detach from the resin substrate in the case of being bonded to the resin substrate and subjected to a heat-resistance index test", means that, in a case in which the foregoing heat-resistance index test is carried out, the film that closely contacted with the resin substrate detaches from the resin substrate within 3 minutes from the placement in the constant temperature vessel such that the portion of the film closely contacting with the glass plate disappears.

(Stretch Ratio)

The film according to the first embodiment preferably has a stretch ratio of more than 0% in a case in which the film is bonded to the resin substrate and subjected to a heat-resistance index test at 50°C for 3 minutes.

From the viewpoint of reducing prismaticity in the optical member obtained, the film according to the first embodiment has a stretch ratio of preferably greater than or equal to 1%, more preferably greater than or equal to 5%, still more preferably greater than or equal to 10% in a case in which the film is bonded to the resin substrate and subjected to a heat-resistance index test at 50°C for 3 minutes.

From the viewpoint of reducing prismaticity in the optical member obtained, the film according to the first embodiment has a stretch ratio of preferably less than or equal to 70%, more preferably less than or equal to 50%, still more preferably less than or equal to 30% in a case in which the film is bonded to the resin substrate and subjected to a heat-resistance index test at 50°C for 3 minutes.

In the measurement of the stretch ratio of the film, the heat-resistance index test at 50°C is performed in the same manner as that described above.

The stretch ratio of the film is measured in the state in which a 1 kg weight attached to the film, at a point of time when 3 minutes have elapsed since the 1 kg weight is attached to the film.

The stretch ratio of the film is expressed as ((Film length when 3 minutes have elapsed - Initial film length)/(Initial film length)) $\times$ 100.

It will be noted that, in a case in which the film detaches from the resin substrate before elapse of 3 minutes and no longer has a portion that is in close contact with the resin substrate, the stretch ratio of the film is defined as ((Film length just before the film detaches from the resin substrate - Initial film length)/(Initial film length)) $\times$ 100.

The film according to the first embodiment preferably satisfies both the conditions (i) and (ii):

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3

minutes, the film exhibits a stretch ratio of more than 0%.

[Glass Ball Tack Test]

In a case in which a glass ball tack test is performed at 80°C using the film according to the first embodiment, the glass ball movement distance is preferably 200 mm or less.

The dynamic pressure-sensitive adhesive force of the film can be measured by the glass ball tack test.

If the glass ball movement distance is 200 mm or less in the glass ball tack test at 80°C using the film according to the first embodiment, the film has excellent dynamic pressure-sensitive adhesive force.

This enables the film according to the first embodiment to better fix the mold substrate. Further, adhered film residues remaining at the time of removing the film and taking out the cured material are reduced.

The glass ball tack test in the first embodiment is performed using a ball tack tester in accordance with JIS-Z0237.

First, a plate on which a film is placed on a surface thereof is prepared. The prepared plate is tilted at 30° with the pressure-sensitive adhesive face of the film being the upper face.

Next, at the predetermined temperature, a glass ball for measurement (4.65 ± 0.03 g) is allowed to roll down from a predetermined position on the film, and the movement distance until the glass ball stops is measured.

In a case in which a glass ball tack test is performed at from 25°C to 80°C using the film according to the first embodiment, the glass ball movement distance is preferably less than or equal to 200 mm.

In other words, in a case in which the glass ball tack test is performed at from 25°C to 80°C, the movement distance of the glass ball is preferably less than or equal to 200 mm throughout the temperature range of from 25°C to 80°C.

It is also preferable that, in a case in which a glass ball tack test is performed at 120°C using the film according to the first embodiment, the glass ball movement distance is less than or equal to 200 mm.

In a case in which the glass ball tack test is performed at 25°C, 80°C, or 120°C using the film according to the first embodiment, the glass ball movement distance is preferably greater than or equal to 10 mm, more preferably greater than or equal to 20 mm, still more preferably greater than or equal to 30 mm.

[Tensile Modulus of Elasticity]

The film according to the first embodiment has a tensile modulus of elasticity at 80°C of preferably greater than or equal to $1.0 \times 10^{10}$ Pa, more preferably greater than or equal to $3.0 \times 10^{10}$ Pa, still more preferably greater than or equal to $5.0 \times 10^{10}$ Pa, and particularly preferably greater than or equal to $7.0 \times 10^{10}$ Pa.

The film according to the first embodiment has a tensile modulus of elasticity at 80°C of preferably less than or equal to $40.0 \times 10^{10}$ Pa, more preferably less than or equal to $30.0 \times 10^{10}$ Pa, still more preferably less than or equal to $20.0 \times 10^{10}$ Pa.

For example, the film according to the first embodiment preferably has a tensile modulus of elasticity at 80°C of from $1.0 \times 10^{10}$ Pa to $40.0 \times 10^{10}$ Pa.

Specific examples of the detailed conditions for the tensile modulus of elasticity measurement test include the following.

Measurement method: DMA single cantilever measurement

- · Tester model: DMA8000
- · Test temperature: From 0°C to 180°C
- · Frequency: 1.0 Hz
- · Temperature increase rate: 3°C/min
- · Measurement area: 1.2 ($cm^2$)
- · Distance between chucks: 12.5 mm

[Pressure-sensitive Adhesive Force]

In a case in which the film according to the first embodiment includes at least a base material layer and a pressure-sensitive adhesive layer, the pressure-sensitive adhesive force of the pressure-sensitive adhesive layer is preferably from 1.0 N/10 mm to 10.0 N/10 mm, more preferably from 2.0 N/10 mm to 7.0 N/10 mm, still more preferably from 3.0 N/10 mm to 5.0 N/10 mm.

The pressure-sensitive adhesive force is measured in accordance with JIS Z 0237:2009.

The film according to the first embodiment may contain a pressure-sensitive adhesive. The pressure-sensitive adhesive may be contained in the pressure-sensitive adhesive layer.

As the pressure-sensitive adhesive, a known pressure-sensitive adhesive may be used, and examples thereof include acrylic resins and rubber. Further, as the pressure-sensitive adhesive, the pressure-sensitive adhesives described

in PCT/JP2021/042848 may be used.

<Injection Step>

The injection step in the first embodiment is a step of injecting a polymerizable composition into the space.
An example of the injection step will be explained using FIG. 2.
FIG. 2 is a schematic diagram for explaining the injection step.
As shown in FIG. 2, in the injection step, a pressure-sensitive adhesive tape 13 is peeled to an extent such that an opening through which a polymerizable composition can be injected into a cavity 14 is formed, a polymerizable composition 20 is injected into the cavity 14 through the opening, and the opening is closed again with the pressure-sensitive adhesive tape 13.
The temperature in the injection step is preferably less than or equal to 30°C, more preferably less than or equal to 27°C, and still more preferably less than or equal to 25°C.
The temperature in the injection step is preferably higher than or equal to 15°C, more preferably higher than or equal to 18°C, and still more preferably higher than or equal to 20°C.

<Polymerizable Composition>

The polymerizable composition in the first embodiment may be a polymerizable composition containing a polymerization catalyst and two or more different monomers for an optical material.
It is preferable that the polymerizable composition in the first embodiment includes a polymerization catalyst and two or more different monomers for an optical material, has a content of the polymerization catalyst of from 0.010 parts by mass to 0.1 parts by mass with respect to a total of 100 parts by mass of the two or more different monomers for an optical material, and has a viscosity of from 30 mPa·s to 1000 mPa·s as measured by a B-type viscometer under conditions of 25°C and 60 rpm.
In the measurement of viscosity with a B-type viscometer at 25°C and 60 rpm, the rotor number is set to be 2.
The viscosity as measured by a B-type viscometer at 25°C and 60 rpm may be the viscosity immediately before injecting the polymerizable composition into the space described above.

(Monomer for Optical Material)

The polymerizable composition in the first embodiment may include two or more different monomers for an optical material.
The monomer for an optical material is not particularly limited as long as the monomer is a monomer used for optics.
For example, the monomer may be a monomer that is used to produce an optical material having any of the following properties.
The optical material obtained using the monomer(s) for an optical material may have a total light transmittance of higher than or equal to 10%. The total light transmittance of the optical material may be measured in accordance with JIS K 7361-1 (1997).
The optical material obtained using the monomer(s) for an optical material may have a haze (i.e., total haze) of less than or equal to 10%, preferably less than or equal to 1%, and more preferably less than or equal to 0.5%. The haze of the optical material is a value as measured at 25°C using a haze measuring device [TC-HIII DPK manufactured by Tokyo Denshoku CO., LTD.] in accordance with JIS-K7105.
The optical material obtained using the monomer for an optical material preferably has a refractive index of higher than or equal to 1.58. The optical material obtained using the monomer for an optical material may have a refractive index of less than or equal to 1.80 or less than or equal to 1.75. The refractive index of the optical material may be measured in accordance with JIS K7142 (2014).
The shape of the optical material obtained using the monomer(s) for an optical material is not particularly limited and may be plate-shaped, cylindrical, rectangular, or the like.
Examples of the monomer for an optical material include a polymerizable monomer that is polymerized when the below-described polymerization catalyst is used. Specific examples include an isocyanate compound, a polythiol compound having two or more mercapto groups, a hydroxythiol compound containing one or more mercapto groups and one or more hydroxy groups, a polyol compound containing two or more hydroxy groups, and an amine compound.
The two or more different monomers for an optical material preferably include (i) an isocyanate compound and (ii) an active hydrogen compound that is at least one selected from the group consisting of a polythiol compound containing two or more mercapto groups, a hydroxythiol compound containing one or more mercapto groups and one or more hydroxy groups, a polyol compound containing two or more hydroxy groups, and an amine compound.

[Isocyanate Compound]

Examples of the isocyanate compound include an aliphatic isocyanate compound, an alicyclic isocyanate compound, an aromatic isocyanate compound, and a heterocyclic isocyanate compound. The isocyanate compound is used singly or in mixture of two or more thereof. The isocyanate compound may include a dimer, a trimer, and/or a prepolymer. Examples of the isocyanate compounds include compounds disclosed as examples in WO2011/055540.
Examples of isocyanate compounds that can be used further include: halogen substitution products (for example, chlorine substitution products and bromine substitution products), alkyl substitution products, alkoxy substitution products, carbodiimide modification products, urea modification products, and biuret modification products of the above-described compounds;

prepolymer-type modification products of the above-described compounds with nitro substitution products, polyhydric alcohols, or the like; and
dimerization or trimerization reaction products of the above-described compounds.

These compounds may be used singly or in mixture of two or more thereof.
In the first embodiment, *alicyclic isocyanate compound* refers to an isocyanate compound that includes an alicyclic structure and may further include a structure other than an alicyclic structure, such as a heterocyclic structure.
*Aromatic isocyanate compound* refers to an isocyanate compound that includes an aromatic structure and may further include any one of an aliphatic structure, an alicyclic structure, or a heterocyclic structure or any combination thereof.
*Heterocyclic isocyanate compound* refers to an isocyanate compound that includes a heterocyclic structure but includes neither an alicyclic structure nor an aromatic structure.
*Aliphatic isocyanate compound* refers to an isocyanate compound that includes none of an aromatic structure, an alicyclic structure, or a heterocyclic structure.
It is preferable that at least one selected from the group consisting of an aliphatic isocyanate compound, an alicyclic isocyanate compound, an aromatic isocyanate compound, and a heterocyclic isocyanate compound is contained as the isocyanate compound.
At least one monomer for an optical material in the first embodiment may be an isocyanate compound having an aromatic ring. Specific examples of the isocyanate compound having an aromatic ring include aromatic isocyanate compounds. More specific examples thereof include an isocyanate compound in which an isocyanate group is directly bonded to an aromatic ring and an isocyanate compound in which an isocyanate group is bonded at a benzyl position of an aromatic ring.
The monomer for an optical material may include an isocyanate compound other than an isocyanate compound having an aromatic ring, i.e., an isocyanate compound having no aromatic ring.
The isocyanate compound other than an isocyanate compound having an aromatic ring is not particularly limited, and an example thereof is an isocyanate compound having no aromatic ring.
In the first embodiment, the isocyanate compound preferably includes, from the viewpoint of maintaining the quality of an optical material and shortening the production time of the optical material, at least one selected from the group consisting of isophorone diisocyanate, 2,5-bis(isocyanatomethyl)bicyclo-[2.2.1]-heptane, 2,6-bis(isocyanatomethyl)bicyclo-[2.2.1]-heptane, m-xylylene diisocyanate, 2,4-tolylene diisocyanate, 2,6-tolylene diisocyanate, dicyclohexylmethane diisocyanate, 1,3-bis(isocyanatomethyl)cyclohexane, 1,4-bis(isocyanatomethyl)cyclohexane, 1,6-hexamethylene diisocyanate, and 1,5-pentamethylene diisocyanate.

more preferably at least one selected from the group consisting of isophorone diisocyanate, 2,5-bis(isocyanatomethyl)bicyclo-[2.2.1]-heptane, 2,6-bis(isocyanatomethyl)bicyclo-[2.2.1]-heptane, m-xylylene diisocyanate, 2,4-tolylene diisocyanate, 2,6-tolylene diisocyanate, dicyclohexylmethane diisocyanate, and 1,3-bis(isocyanatomethyl) cyclohexane, and
still more preferably at least one selected from the group consisting of 2,5-bis(isocyanatomethyl)bicyclo-[2.2.1]-heptane and 2,6-bis(isocyanatomethyl)bicyclo-[2.2.1]-heptane, and m-xylylene diisocyanate.

[Active Hydrogen Compound]

Examples of the active hydrogen compound include a polythiol compound having two or more mercapto groups, a hydroxythiol compound containing one or more mercapto groups and one or more hydroxy groups, a polyol compound containing two or more hydroxy groups, and an amine compound.
As the active hydrogen compound, an oligomer of the above-described active hydrogen compound or a halogen substitution product (for example, a chlorine substitution product or a bromine substitution product) of the above-described

active hydrogen compound may be used.

The active hydrogen compound may be used singly or in mixture of two or more thereof.

(Polythiol Compound Having Two or More Mercapto Groups)

Examples of the polythiol compound having two or more mercapto groups include compounds disclosed as examples in WO2016/125736.

In the first embodiment, the polythiol compound preferably includes, from the viewpoint of maintaining the quality of an optical material and shortening the production time of the optical material, at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), bis(mercaptoethyl)sulfide, pentaerythritol tetrakis(2-mercaptoacetate), 2,5-bis(mercaptomethyl)-1,4-dithiane, 1,1,3,3-tetrakis(mercaptomethylthio)propane, 4,6-bis(mercaptomethylthio)-1,3-dithiane, and 2-(2,2-bis(mercaptomethylthio)ethyl)-1,3-dithietane,

more preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), pentaerythritol tetrakis(2-mercaptoacetate), and 2,5-bis(mercaptomethyl)-1,4-dithiane, and

still more preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate).

(Hydroxythiol Compound containing One or More Mercapto Groups and One or More Hydroxy groups)

Examples of the thiol compound having a hydroxy group include, but are not limited thereto, 2-mercaptoethanol, 3-mercapto-1,2-propanediol, glycerine bis(mercaptoacetate), 4-mercaptophenol, 2,3-dimercapto-1-propanol, pentaerythritol tris(3-mercaptopropionate), and pentaerythritol tris(thioglycolate).

(Polyol Compound Containing Two or More Hydroxy groups)

Examples of the polyol compound include one or more aliphatic or alicyclic alcohols. Specific examples thereof include linear or branched aliphatic alcohols, alicyclic alcohols, and alcohols obtained by adding at least one selected from the group consisting of ethylene oxide, propylene oxide, and ε-caprolactone to these alcohols. More specific examples thereof include compounds described as examples in WO2016/125736.

The polyol compound is preferably at least one selected from the group consisting of ethylene glycol, diethylene glycol, triethylene glycol, propylene glycol, 1,3-propanediol, 1,2-cyclopentanediol, 1,3-cyclopentanediol, 1,2-cyclohexanediol, 1,3-cyclohexanediol, and 1,4-cyclohexanediol.

(Amine Compound)

Examples of the amine compound include:

primary polyamine compounds such as ethylene diamine, 1,2- or 1,3-diaminopropane, 1,2-, 1,3- or 1,4-diaminobutane, 1,5-diaminopentane, 1,6-diaminohexane, 1,7-diaminoheptane, 1,8-diaminooctane, 1,10-diaminodecane, 1,2-, 1,3- or 1,4-diaminocyclohexane, o-, m- or p-diaminobenzene, 3,4- or 4,4'-diaminobenzophenone, 3,4- or 4,4'-diaminodiphenylether, 4,4'-diaminodiphenylmethane, 4,4'-diaminodiphenylsulfide, 3,3' or 4,4'-diaminodiphenylsulfone, 2,7-diaminofluorene, 1,5-, 1,8- or 2,3-diaminonaphthalene, 2,3-, 2,6- or 3,4-diaminopyridine, 2,4- or 2,6-diaminotoluene, m- or p-xylylenediamine, isophoronediamine, diaminomethylbicycloheptane, 1,3- or 1,4-diaminomethylcyclohexane, 2- or 4-aminopiperidine, 2- or 4-aminomethylpiperidine, 2- or 4-aminoethylpiperidine, N-aminoethylmorpholine, and N-aminopropylmorpholine;

monofunctional secondary amine compounds such as diethylamine, dipropylamine, di-n-butylamine, di-sec-butylamine, diisobutylamine, di-n-pentylamine, di-3-pentylamine, dihexylamine, dioctylamine, di(2-ethylhexyl)amine, methylhexylamine, diallylamine, N-methylallylamine, piperidine, pyrrolidine, diphenylamine, N-methylamine, N-ethylamine, dibenzylamine, N-methylbenzylamine, N-ethylbenzylamine, dicyclohexylamine, N-methylaniline, N-ethylaniline, dinaphthylamine, 1-methylpiperazine, and morpholine; and

secondary polyamine compounds such as N,N'-dimethylethylene diamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylene diamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,5-diaminopentane, N,N'-diethyl-1,6-diaminohexane, N,N'-diethyl-1,7-diaminoheptane, piperazine, 2-methylpiperazine, 2,5-dimethylpiperazine, 2,6-dimethylpiperazine, homopiperazine, 1,1-di-(4-piperidyl)methane, 1,2-di-(4-piperidyl)ethane, 1,3-di-(4-piperidyl)propane, 1,4-di-(4-piperidyl)butane, and tetramethylguanidine.

Among the above-described compounds, the active hydrogen compound preferably includes a polythiol compound having two or more mercapto groups from the viewpoint of heightening the heat resistance and refractive index of the cured material.

The content of the polythiol compound having two or more mercapto groups with respect to the total mass of the active hydrogen compound is preferably 60% by mass or more, more preferably 70% by mass or more, and still more preferably 80% by mass or more.

Further, in the active hydrogen compound in the first embodiment, the total content of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate) with respect to the total mass of the active hydrogen compound is preferably 60% by mass or more, more preferably 70% by mass or more, and still more preferably 80% by mass or more.

<Polymerization Catalyst>

The polymerizable composition in the first embodiment preferably includes at least one polymerization catalyst.

The polymerization catalyst is not particularly limited, and examples thereof include basic catalysts, organometal-based catalysts, zinc carbamate, ammonium salts, and sulfonic acid.

The polymerization catalyst may be used singly or in an appropriate combination of two or more thereof.

(Basic Catalyst)

Examples of the basic catalyst include amine-based catalysts (including imidazole-based catalysts).

Specific examples thereof include: tertiary amine-based catalysts such as triethylenediamine, N,N-dimethylethanolamine, triethylamine, and N-ethylmorpholine; and 2-methylpyrazine, pyridine, α-picoline, β-picoline, γ-picoline, 2,6-lutidine, 3,5-lutidine, 2,4,6-collidine, 3-chloropyridine, N,N-diethylaniline, N,N-dimethylaniline, hexamethylenetetramine, quinoline, isoquinoline, N,N-dimethyl-p-toluidine, N,N-dimethylpiperazine, quinaldine, 4-methylmorpholine, triallylamine, trioctylamine, 1,2-dimethylimidazole, and 1-benzyl-2-methylimidazole.

Among the above, the basic catalyst is preferably an amine-based catalyst.

Examples of the amine-based catalyst include: 3,5-lutidine; 2,4,6-collidine; and tertiary amine-based catalysts such as triethylenediamine, N,N-dimethylethanolamine, triethylamine, and N-ethylmorpholine.

The amine-based catalyst preferably includes at least one selected from the group consisting of 3,5-lutidine, 2,4,6-collidine, triethylenediamine, N,N-dimethylethanolamine, and N-ethylmorpholine.

It is also preferable that the basic catalyst includes a compound represented by the following Formula (2) and/or a compound represented by the following Formula (3).

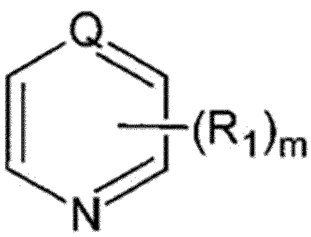 (2)

In Formula (2), $R_1$ represents a linear alkyl group having from 1 to 20 carbon atoms, a branched alkyl group having from 3 to 20 carbon atoms, a cycloalkyl group having from 3 to 20 carbon atoms, or a halogen atom, and plural $R_1$'s, if present, may be the same or different. Further, Q represents a carbon atom or a nitrogen atom, and m represents an integer from 0 to 5.

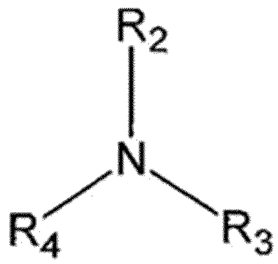

(3)

In Formula (3), each of $R_2$, $R_3$, and $R_4$ independently represents a linear alkyl group having from 1 to 20 carbon atoms, a branched alkyl group having from 3 to 20 carbon atoms, a cycloalkyl group having from 3 to 20 carbon atoms, an allyl group, or a hydrocarbon group containing a hydroxy group.

The basic catalyst has a pKa value of preferably greater than or equal to 1, more preferably greater than or equal to 3, and still more preferably greater than or equal to 4.

The basic catalyst has a pKa value of preferably less than or equal to 9, and more preferably less than or equal to 8.

The pKa value (acid dissociation constant) can be measured by, for example, (a) the method described in The Journal of Physical Chemistry vol. 68, number 6, page 1560 (1964) or (b) a method using an automatic potentiometric titrator (for example, AT- 610 (trade name)) manufactured by Kyoto Electronics Manufacturing Co., Ltd, or (c) the acid dissociation constants described in the Chemical Handbook edited by the Chemical Society of Japan (3rd revised edition, June 25, 1984, published by Maruzen Publishing Co., Ltd.) may be used.

(Organometal-based Catalyst)

Examples of the organometal-based catalyst include: organotin-based catalysts; organic acid salts of iron, nickel, zinc or the like; acetylacetonate complexes; a catalyst composition composed of a carboxylic acid metal compound and a quaternary ammonium salt compound; a catalyst composition composed of a bicyclic tertiary amine compound and a quaternary ammonium salt compound; and a metal catalyst in which an alkoxy group, a carboxy group, or the like is coordinated to titanium or aluminum.

Among the above, the organometal-based catalyst is preferably an organotin-based catalyst.

Examples of the organotin-based catalyst include dibutyltin dichloride (DBC), dimethyltin dichloride (DMC), dibutyltin dilaurate (DBTDL), and dibutyltin diacetate.

The organotin-based catalyst preferably includes at least one selected from the group consisting of dibutyltin dichloride, dimethyltin dichloride, dibutyltin dilaurate, and dibutyltin diacetate.

The polymerization catalyst preferably includes at least one selected from the group consisting of a basic catalyst having a pKa value of from 4 to 8 and an organometal-based catalyst.

It is also preferable that the polymerization catalyst includes at least one selected from the group consisting of an amine-based catalyst and an organotin-based catalyst.

It is preferable that at least one selected from the group consisting of 3,5-lutidine, 2,4,6-collidine, triethylenediamine, N,N-dimethylethanolamine, triethylamine, N-ethylmorpholine, dibutyltin dichloride, dimethyltin dichloride, dibutyltin dilaurate, and dibutyltin diacetate is contained as the polymerization catalyst.

From the viewpoint of favorably promoting a polymerization reaction, the content of the polymerization catalyst in the polymerizable composition in the first embodiment is preferably greater than or equal to 0.010 parts by mass, more preferably greater than or equal to 0.020 parts by mass, and still more preferably greater than or equal to 0.030 parts by mass, with respect to a total of 100 parts by mass of two or more different monomers for an optical material.

From the viewpoint of improving handleability at the time of injecting the polymerizable composition into the mold, the content of the polymerization catalyst in the polymerizable composition in the first embodiment is preferably less than or equal to 0.10 parts by mass, and more preferably less than or equal to 0.090 parts by mass, with respect to a total of 100 parts by mass of two or more different monomers for an optical material.

(Other Additives)

The polymerizable composition in the first embodiment may include any additive.

Examples of the additive include a photochromic compound, an alcohol compound, a visible light-absorbing dye, an internal mold release agent, a bluing agent, and a UV absorber.

(Photochromic Compound)

A photochromic compound is a compound of which molecular structure changes reversibly when exposed to light at a specific wavelength, which, in turn, changes the light absorption characteristics (absorption spectrum) of the compound.
Examples of the photochromic compound for use in the first embodiment include compounds of which absorption characteristics (absorption spectrum) change with respect to a light of a specific wavelength.
In the first embodiment, the photochromic compound is not particularly limited, and any of conventionally known compounds usable in photochromic lenses may be selected, as appropriate, and used. For example, one of, or two or more of, spiropyran-based compounds, spirooxazine-based compounds, fulgide-based compounds, naphthopyran-based compounds, bisimidazole compounds, and the like may be used in accordance with the desired coloring.
Photochromic compounds can be obtained by the methods described in, for example, WO2009/146509, WO2010/20770, WO2012/149599, and WO2012/162725.

(Visible Light-Absorbing Dye)

Commercially available products of visible light-absorbing dyes may be used. Organic dye compounds are preferable. Specific examples thereof include porphyrin compounds and tetraazaporphyrin compounds. More specific examples of visible light-absorbing dyes include PD-3115 (manufactured by Yamamoto Chemicals Inc.).

(Internal Mold Release Agent)

Examples of the internal mold release agent include acidic phosphate esters. Examples of acidic phosphoric acid esters include phosphoric monoesters and phosphoric diesters, which may be used singly or in mixture of two or more thereof.

(Bluing Agent)

Examples of the bluing agent include those that have an absorption band in the wavelength range from orange to yellow in the visible light region and have the function of adjusting the hue of the optical material formed of a resin. More specifically, the scope of the bluing agent includes a substance exhibiting a blue to purple color.

(UV Absorber)

Examples of a UV absorber used herein include: benzophenone-based UV absorbers such as 2,2'-dihydroxy-4-methoxybenzophenone; triazine-based UV absorbers such as 2-[4-[(2-hydroxy-3-dodecyloxypropyl)oxy]-2-hydroxyphenyl]4,6-bis(2,4-dimethylphenyl)-1,3,5-triazine; and benzotriazole-based UV absorbers such as 2-(2H-benzotriazole-2-yl)-4-methylphenol and 2-(2H-benzotriazole-2-yl)-4-tert-octylphenol. Preferred examples thereof include benzotriazole-based UV absorbers of 2-(2H-benzotriazole-2-yl)-4-tert-octylphenol and 2-(5-chloro-2H-benzotriazole-2-yl)-4-methyl-6-tert-butylphenol. These UV absorbers may be used singly or in combination of two or more thereof.
As a compound that absorbs and cuts light of a specific wavelength, compounds such as dyes and UV absorbers described in WO2017/047684 and WO2015/037628 may also be used.

(Alcohol Compound)

The polymerizable composition in the first embodiment may include an alcohol compound.
The polymerizable composition in the first embodiment can impart favorable light modulation characteristics to a resin when the polymerizable composition includes an alcohol compound.
Examples of the alcohol compound include the PLURONIC series manufactured by BASF.
The structures of compounds included in the PLURONIC series are illustrated, for example, in non-patent document (P. Alexandridis, T.A. Hatton/Colloids Surfaces A: Physicochem. Eng. Aspects 96 (1995) ) 1-46).
The polymerizable composition in the first embodiment preferably includes, in addition to the polymerization catalyst and the two or more different monomers for an optical material described above, at least one selected from the group consisting of a photochromic compound, an alcohol compound, and a visible light-absorbing dye, and more preferably includes at least one of (i) a combination of a photochromic compound and an alcohol compound or (ii) a visible light-absorbing dye.

(Viscosity)

From the viewpoint of reducing striae and reducing leaching of pressure-sensitive adhesive, the polymerizable composition in the first embodiment has a viscosity as measured by a B-type viscometer under conditions of 25°C and 60 rpm of higher than or equal to 30 mPa·s, preferably higher than or equal to 40 mPa·s, more preferably higher than or equal to 70 mPa·s, still more preferably higher than or equal to 80 mPa·s, particularly preferably higher than or equal to 100 mPa s, and even more preferably higher than or equal to 120 mPa s.

From the viewpoint of maintaining favorable handleability at the time of forming an optical material into a desired shape, the polymerizable composition in the first embodiment has a viscosity as measured by a B-type viscometer under conditions of 25°C and 60 rpm of preferably less than or equal to 1000 mPa·s, more preferably less than or equal to 700 mPa·s, and still more preferably less than or equal to 400 mPa·s.

<Curing Step>

The curing step in the first embodiment is a step of curing a polymerizable composition injected into the space, thereby obtaining a cured material.

Since the method of producing an optical member according to the first embodiment includes the curing step, the polymerizable composition can be polymerized, and an optical material can be produced.

In the curing step, the curing time is preferably less than or equal to 20 hours.

In particular, in the curing step in the first embodiment, in a case in which the curing time is less than or equal to 20 hours, the amount of leaching of a pressure-sensitive adhesive tends to be significantly reduced, and the above-described white cloudiness, void, and the like can be reduced more favorably.

The curing time in the first embodiment means the length of time from the point of time when the temperature of the polymerizable composition reaches 30°C until the polymerizable composition is completely cured.

From the above-described viewpoint, the curing time is preferably less than or equal to 7 hours, and more preferably less than or equal to 5 hours.

From the viewpoint of curability of the polymerizable composition, the curing time is preferably greater than or equal to 1 hour, and more preferably greater than or equal to 3 hours.

The maximum curing temperature in the curing step is preferably lower than or equal to 150°C, more preferably lower than or equal to 130°C, still more preferably lower than or equal to 100°C, and particularly preferably lower than or equal to 80°C.

The maximum curing temperature in the curing step is preferably higher than or equal to 50°C, more preferably higher than or equal to 60°C, and still more preferably higher than or equal to 70°C.

In the curing step, a microwave irradiation step of irradiating the polymerizable composition with microwaves for a predetermined time may be provided, as necessary.

<Cured Material>

The cured material according to the first embodiment is a cured material of the polymerizable composition according to the first embodiment.

The cured material according to the first embodiment can be favorably used as an optical member.

The cured material according to the first embodiment preferably includes at least one selected from the group consisting of a photochromic compound, an alcohol compound, and a visible light-absorbing dye, and more preferably includes at least one of (i) a combination of a photochromic compound and an alcohol compound or (ii) a visible light-absorbing dye.

<Optical Member>

The optical member according to the first embodiment is produced by the method of producing an optical member according to the first embodiment.

The optical member produced may include a first layer and a second layer. A configuration may be adopted in which the first layer is a cured material of the polymerizable composition in the first embodiment, and the second layer is the resin substrate in the first embodiment.

The optical member according to the first embodiment is preferably an optical member which includes a first layer and a second layer, and in which the average thickness of the second layer is greater than the average thickness of the first layer, and in which the first layer contains at least one selected from the group consisting of a photochromic compound, an alcohol compound, and a visible light-absorbing dye (more preferably at least one of (i) a combination of a photochromic compound and an alcohol compound or (ii) a visible light-absorbing dye), and which has a prism difference of 0.25 mm or

less, and in which a stria having a length of 1.0 mm or more is not present in a region within a radius of 15 mm from the center of the optical member.

The prism difference is measured by the following method.

The thickness is measured at a total of five points that are: the center of the optical member, two radius midpoints on a diameter line, and two radius midpoints on a line that orthogonally crosses the foregoing diameter line and that passes through the center of the optical member.

Next, the values of the thickness differences from the center thickness (also referred to as "thickness differences from the center") are calculated by subtracting the thickness at the center of the optical member from the thicknesses at the four points other than the center of the optical member. In other words, four values of the thickness differences from the center are obtained. The thickness difference from the center is a negative (-) value at a point at which the thickness is smaller than the thickness of the center, and is a positive (+) value at a point at which the thickness is larger than the thickness of the center.

The minimum value of the obtained four thickness differences from the center is subtracted from the maximum value of the four thickness differences from the center, to calculate the maximum difference in thickness, which is used as the prism difference.

The second layer preferably has a stepped shape at a part of the outer periphery of the second layer. As an example, a case will be described in which: a film is bonded to outer peripheral faces of two mold substrates that are arranged to face each other with a predetermined spacing therebetween, thereby forming a space enclosed by the two mold substrates and the film; and then a polymerizable composition is injected into the space; and then the polymerizable composition is cured. In this case, a part of the film bonded to the outer peripheral faces overlaps with another part of the film. Due to the presence of the overlapping portion, the optical member obtained will have a stepped shape formed at a part of the outer periphery thereof.

The stepped shape can be eliminated by moderate grinding.

It is preferable that the optical member including a cured material immediately after curing includes a first layer and a second layer, and the second layer has a stepped shape at a part of the outer periphery thereof.

At the center of the optical member according to the first embodiment, a value H1, which is a value obtained by dividing the haze of the first layer by the thickness of the first layer, is preferably higher than a value H2, which is a value obtained by dividing the haze of the second layer by the thickness of the second layer. This feature further improves the performance of the optical material provided by the first layer. For example, in a case in which the first layer includes a photochromic compound, the photochromic performance of the optical material imparted by the first layer is further improved (for example, the developed color is deep at the color developed period, and the fading half-life is short at the fading period).

According to the method of producing an optical member according to the first embodiment, an optical member in which the value H1 is higher than the value H2 can easily be produced.

In the optical member according to the first embodiment, the ratio of value H1 to value H2 is, from the viewpoint of further improving the performance of the optical member imparted by the first layer, preferably from 1.001 to 1.500, more preferably from 1.100 to 1.500, and still more preferably from 1.200 to 1.400.

According to the method of producing an optical member according to the first embodiment, an optical member in which the ratio of value H1 to value H2 is within the above-described preferable range can easily be produced.

<Use of Optical Member>

The optical member according to the first embodiment can be used in plastic lenses, prisms, optical fibers, information recording substrates, filters, light-emitting diodes, and the like.

Among the above, the optical member according to the first embodiment can be suitably used for lenses, more suitably used for plastic lenses, and still more suitably used for plastic lenses for eyeglasses.

<Annealing Step>

If necessary, the method of producing an optical member according to the first embodiment may include an annealing step of annealing the cured polymerizable composition.

The temperature during annealing treatment is usually from 50°C to 150°C, preferably from 90°C to 140°C, and more preferably from 100°C to 130°C.

Specific means according to the first embodiment include the following aspects.

<1A> A method of producing an optical member, including:

a space formation step of bonding a film to outer peripheral faces of a mold substrate and a resin substrate that are

arranged to face each other with a predetermined spacing therebetween, thereby forming a space enclosed by the mold substrate, the resin substrate, and the film;
an injection step of injecting a polymerizable composition into the space; and
a curing step of curing the polymerizable composition injected into the space, thereby obtaining a cured material, wherein the film satisfies at least one of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

<2A> The method of producing an optical member according to <1A>, wherein the film satisfies both of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

<3A> The method of producing an optical member according to <1A> or <2A>, wherein, in a case in which a glass ball tack test is performed at 80°C using the film, a glass ball movement distance is 200 mm or less.
<4A> The method of producing an optical member according to any one of <1A> to <3A>, wherein the polymerizable composition includes a polymerization catalyst and two or more different monomers for an optical material, the content of the polymerization catalyst is from 0.01 parts by mass to 0.1 parts by mass with respect to a total of 100 parts by mass of the two or more different monomers for an optical material, and the polymerizable composition has a viscosity of from 30 mPa·s to 1000 mPa·s as measured by a B-type viscometer under conditions of 25°C and 60 rpm.
<5A> The method of producing an optical member according to <4A>, wherein the polymerizable composition includes at least one selected from the group consisting of a photochromic compound and an alcohol compound.
<6A> The method of producing an optical member according to <4A> or <5A>, wherein the two or more different monomers for an optical material include an isocyanate compound and an active hydrogen compound that is at least one selected from the group consisting of a polythiol compound containing two or more mercapto groups, a hydroxythiol compound containing one or more mercapto groups and one or more hydroxy groups, a polyol compound containing two or more hydroxy groups, and an amine compound.
<7A> An optical member, including:
a first layer and a second layer, wherein:

the average thickness of the second layer is greater than the average thickness of the first layer,
the first layer contains at least one selected from the group consisting of a photochromic compound and an alcohol compound, and
the optical member has a prism difference of 0.25 mm or less, and no stria having a length of 1.0 mm or more is present in a region within a radius of 15 mm from the center of the optical member.

<8A> The optical member according to <7A>, wherein the second layer has a stepped shape at a part of an outer periphery of the second layer.

<<Method of Producing Optical Member>>

The method of producing an optical member according to the second embodiment includes:

a space formation step of bonding a film to outer peripheral faces of a pair of mold substrates that are arranged to face each other with a predetermined spacing therebetween, thereby forming a space enclosed by the pair of mold substrates and the film;
an injection step of injecting a polymerizable composition into the space; and
a curing step of curing the polymerizable composition injected into the space, thereby obtaining a cured material, wherein the ratio of the heat-resistance index of the film measured under conditions of 30°C and 30 minutes to the heat-resistance index of the film measured under conditions of 20°C and 30 minutes is more than 0.1, and the degree of polymerization of the polymerizable composition is 15% or more if the curing step is carried out at 30°C.

The method of producing an optical member according to the second embodiment is capable of producing an optical member having reduced prismaticity due to the method including the above-described features.

In the production of an optical member by means of curing a polymerizable composition, in many cases, the outer peripheral face of a cured material immediately after curing is not smooth, and wrinkles, including bumps-dips shape, occur. One reason for this may be that, due to the polymerization shrinkage of the polymerizable composition, the film (for example, a tape) surrounding the outer periphery is pulled, thereby causing wrinkles, which will be transferred to the side face of the cured material. In the second embodiment, the wrinkles caused by polymerization shrinkage are also referred to as "polymerization wrinkles".

Cured materials having polymerization wrinkles on their outer peripheral faces have conventionally been subjected to grinding or the like so as to smoothen the outer peripheral faces, as with the above-described case of non-uniform thickness, from the viewpoint of ensuring quality. However, this produces disadvantages, for example: it is necessary to take the later-performed grinding into account, and set the size of the cured material before grinding to be larger; and shavings generated are disposed of as waste.

In view of the above, a method of producing an optical member is desired by which an optical member having a smooth outer peripheral face can be produced with no or only a small amount of grinding.

The method of producing an optical member according to the second embodiment is also capable of reducing polymerization wrinkles on the outer peripheral face.

Usually, in production of a lens, a polymerizable composition (which may include a compound, for example, a photochromic compound) is injected into a gap between two mold substrates that are disposed to face each other with a predetermined spacing therebetween, and the polymerizable composition is cured. The cured material after curing can be used as a lens material (this method is also referred to as the "single casting method").

Alternatively, for example, a polymerizable composition may be injected into a gap between the mold substrate and the lens material obtained above, and the polymerizable composition is cured (this method is also referred to as "double casting method"). In this method, in a case in which a polymerizable composition containing a photochromic compound is injected into a gap between the mold substrate and the lens material obtained above, a cured material in which a layer containing the photochromic compound and the like and a layer of the lens material are disposed one on the other can be obtained as the cured material after curing.

Since the prismaticity of the cured material obtained by the method of producing an optical member according to the second embodiment is small, the necessity to make prism correction by means of grinding is low, and the method can be suitably used in the case of an optical material obtained by a method including multiple rounds of casting (for example, the double casting method) (i.e., a layered body in which layers are disposed one on another).

Here, cured materials obtained by the single casting method and cured materials obtained by the double casting method often have a non-uniform thickness, as described above.

In the case of using only the single casting method, the non-uniformity of the thickness can be eliminated simply by grinding thick parts. It will be noted that the grinding needs to be performed generally from the eye side (also referred to as the "back side") rather than from the side at which an object to be watched is present (also referred to as the "front side").

However, since the cured material obtained by the double casting method is a layered body having stacked layers, it is difficult to grind, from the back side, a layer that is disposed at the front side. Therefore, it is difficult to eliminate, by grinding the cured material, the non-uniformity of the thickness of a layer that is disposed at the front side.

As an example, a case will be described in which: a film is bonded to outer peripheral faces of a pair of mold substrates that are arranged to face each other with a predetermined spacing therebetween, thereby forming a space enclosed by the pair of mold substrates and the film; and then a polymerizable composition is injected into the space; and then the polymerizable composition is cured. In this case, a part of the film bonded to the outer peripheral faces is made to overlap with another part of the film, in order to prevent leakage of the polymerizable composition. When a polymerizable composition is polymerized and cured, it is usually preferable that the polymerizable composition undergoes polymerization shrinkage, and that the distance between the molds decreases uniformly.

However, the strength of the film increases in the above-described overlapping portion, which inhibits the distance between the molds from decreasing during polymerization and shrinkage of the polymerizable composition.

As a result, the thickness of the cured material at a region at or around the overlapping portion becomes greater than that at a region at or around the other portionss having no overlapping. As a result, the thickness of the cured material as a whole becomes uneven, and the prismaticity becomes large.

The method of producing an optical member according to the second embodiment is capable of solving the above-described problem.

The method of producing an optical member according to the second embodiment is capable of producing an optical member having reduced prismaticity, due to the method including the above-described features.

In addition, the method of producing an optical member according to the second embodiment is capable of producing an optical member having reduced prismaticity with no or only a small amount of grinding for prism correction.

Further, polymerization wrinkles that are generated on tape during polymerization shrinkage can be reduced due

to the method of producing an optical member according to the second embodiment including the above-described features, and, therefore, an optical member in which polymerization wrinkles on the outer peripheral face of the optical member are reduced can also be produced.

The foregoing advantages are considered to be particularly advantageous in the case of, for example, using the double casting method. According to the method of producing an optical member according to the second embodiment, a high-quality optical member having reduced prismaticity can be produced with no or only a small amount of grinding for prism correction. Therefore, in a case in which a double casting method including layering another optical member on the optical member according to the second embodiment is carried out, the optical member according to the second embodiment is used with no or only a small amount of grinding for prism correction. Thus, the workload of grinding can be reduced. In addition, shavings generated by grinding can be eliminated or reduced.

There are cases in which a pressure-sensitive adhesive in the film leaches into the polymerizable composition. The pressure-sensitive adhesive that has leached into the polymerizable composition may cause white cloudiness, void, or the like in the resultant cured material.

The method of producing an optical member according to the second embodiment is also capable of favorably reducing such white cloudiness, void, and the like, due to the method including a combination of features described above.

The curing time in the curing step in the second embodiment is particularly preferably 20 hours or less, since the above-described wrinkles, white cloudiness, void, and the like can be more favorably reduced when the curing time is within the above range.

<Space Formation Step>

The space formation step is a step of bonding a film to outer peripheral faces of a pair of mold substrates that are arranged to face each other with a predetermined spacing therebetween, thereby forming a space enclosed by the pair of mold substrates and the film.

An example of the space formation step will be explained using FIG. 3.

FIG. 3 is a schematic diagram for explaining the space formation step.

First, as shown in FIG. 3, a lens cast-molding polymerization mold 110 is prepared. For example, a mold substrate 111 for convex face formation that is made of glass and a mold substrate 112 for concave face formation are prepared. The outer diameters of the mold substrate 111 and the mold substrate 112 may be the same as the finished outer diameter of the plastic lens.

In a state in which the mold substrates 111 and 112 are arranged to face each other with a predetermined spacing therebetween, a film (for example, pressure-sensitive adhesive tape) 113 is wrapped around the outer peripheral faces of the mold substrates 111 and 112 slightly more than one revolution to affix the mold substrates 111 and 112 with the pressure-sensitive adhesive tape and enclose a gap between the mold substrates 111 and 112. This results in the formation of a space enclosed by the mold substrates and the film (i.e., cavity 114 for molding a lens). The film 113 may be a removable or thermally-removable pressure-sensitive adhesive tape.

The method of producing an optical member according to the second embodiment uses a pair of mold substrates. The pair of mold substrates may be a pair of mold substrates.

The mold in the second embodiment (also referred to as "mold for producing an optical member") is preferably a mold configured to produce an optical member through a process including: bonding a film to outer peripheral faces of a pair of mold substrates that are arranged to face each other with a predetermined spacing therebetween, thereby forming a space enclosed by the pair of mold substrates and the film; placing a polymerizable composition in the space; and curing the polymerizable composition to obtain a cured material.

The main face of the mold in the second embodiment preferably has an approximate diameter of from 60 cm to 80 cm.

As described above, use of the method of producing an optical member according to the second embodiment enables production of an optical member having reduced prismaticity with no or only a small amount of grinding.

Therefore, the approximate diameters of the main faces of the mold and the resin substrate can be reduced by a degree corresponding to the elimination or reduction of grinding.

A case in which the double casting method is performed in order to obtain a cured material in which a layer containing a photochromic compound or the like and a layer of the above-described lens material are disposed one on the other is also described below.

In the case of performing the double casting method, the method of producing an optical member according to the second embodiment may include, in the second or subsequent round of casting, a step of bonding a film to outer peripheral faces of a mold substrate and a cured material obtained in the curing step, which are arranged to face each other with a predetermined spacing therebetween, thereby forming a space enclosed by the mold substrate, the cured material, and the film.

In this case, the method of producing an optical member according to the second embodiment may further

include an injection step of injecting a polymerizable composition into the above-described space, and a curing step of curing the polymerizable composition injected into the space, to obtain a cured material.

In the case of performing the double casting method, the cured material obtained by the curing step may be a resin substrate. The resin substrate in the second embodiment is a substrate formed of a resin.

The resin substrate may be, for example, an optical element such as a lens or a semi-finished lens, and may include a photochromic compound or the like.

The optical member obtained by the double casting method may include a first layer and a second layer. For example, either the first layer or the second layer may contain a photochromic compound or the like.

<Film>

The method of producing an optical member according to the second embodiment uses the film according to the second embodiment (also referred to as "film for producing an optical member").

The film according to the second embodiment has a ratio of a heat-resistance index measured under conditions of 30°C and 30 minutes to a heat-resistance index measured under conditions of 20°C and 30 minutes (also referred to as "heat-resistance index ratio") of more than 0.1.

Due to this feature, the mold slides on a surface of the film at an appropriate degree at the time of polymerization shrinkage in the curing step. Therefore, the generation of polymerization wrinkles on the film can be reduced, which in turn reduces the generation of polymerization wrinkles on the outer peripheral face of the cured material obtained. Further, the spacing between the molds can be uniformly narrowed during polymerization shrinkage in the curing step. As a result, the prismaticity can be reduced.

The film according to the second embodiment preferably includes at least a base material layer and a pressure-sensitive adhesive layer.

The film according to the second embodiment may be formed of a single layer that is a base material layer, or may be a layered body in which a base material layer and a pressure-sensitive adhesive layer are layered.

(Heat-Resistance Index Ratio)

The film according to the second embodiment has a ratio of a heat-resistance index measured under conditions of 30°C and 30 minutes to a heat-resistance index measured under conditions of 20°C and 30 minutes (also referred to as "heat-resistance index ratio") of more than 0.1.

Due to the heat-resistance index ratio being more than 0.1, it is possible to inhibit sliding of the film and thereby preventing leakage of the polymerizable composition, at or around 20°C, which is a temperature usually employed when the polymerizable composition is injected into the space between the molds. In addition, due to the heat-resistance index ratio being more than 0.1, the sliding of the film is facilitated at an elevated temperature of at or around 30°C, at which the polymerizable composition starts to polymerize. Since the sliding of the film at or around the temperature at which the polymerization starts is facilitated, the polymerization shrinkage of the polymerizable composition can more easily be accepted by reduction in the distance between the molds. This makes it possible to reduce polymerization wrinkles and thereby smoothen the outer peripheral face, and also to reduce the prismaticity.

From the foregoing viewpoint, the heat-resistance index ratio is preferably higher than or equal to 0.2, more preferably higher than or equal to 1.0, and still more preferably higher than or equal to 2.0.

The heat-resistance index ratio is preferably lower than or equal to 20.0, more preferably lower than or equal to 15.0, and still more preferably lower than or equal to 10.0, from the viewpoint of reducing the white cloudiness of the resin caused by leaching of tape glue.

[Heat-Resistance Index Test]

The heat-resistance index of the film according to the second embodiment can be measured by a heat-resistance index test.

The heat-resistance index test can measure the static pressure-sensitive adhesive force of the film.

The specific method of the heat-resistance index test is as follows.

(Method)

At room temperature, a portion having an area of 625 $mm^2 \pm 25$ $mm^2$ in the exposed surface of the pressure-sensitive adhesive layer of the film having a width of 25 mm ± 6 mm and a length of 80 mm ± 0.5 mm is brought into close contact with a glass plate and pressure-bonded at a load of 1 $kg/cm^2$. A 1 kg weight is attached to the end of a folded portion of the film that is not in close contact with the glass plate, and the resultant is placed in a constant temperature vessel

maintained at a predetermined temperature (20°C or 30°C) such that the glass plate is oriented in the vertical direction. After a predetermined period (30 minutes) has elapsed since the placement in the constant temperature vessel, the position of the top end of the portion to which the pressure-sensitive adhesive layer adheres is measured, and the movement distance from the position of the top end immediately after the weight is attached is calculated and used as the heat-resistance index.

[Tensile Modulus of Elasticity]

The film according to the second embodiment has a tensile modulus of elasticity at 80°C of preferably greater than or equal to $1.0 \times 10^{10}$ Pa, more preferably greater than or equal to $2.0 \times 10^{10}$ Pa, still more preferably greater than or equal to $5.0 \times 10^{10}$ Pa, and particularly preferably greater than or equal to $4.0 \times 10^{10}$ Pa.
The film according to the second embodiment has a tensile modulus of elasticity at 80°C of preferably less than or equal to $40.0 \times 10^{10}$ Pa, more preferably less than or equal to $30.0 \times 10^{10}$ Pa, and still more preferably less than or equal to $20.0 \times 10^{10}$ Pa.
For example, the film according to the second embodiment preferably has a tensile modulus of elasticity at 80°C of from $1.0 \times 10^{10}$ Pa to $40.0 \times 10^{10}$ Pa.
The tensile modulus of elasticity measurement test is conducted in accordance with JIS Z0237.
The detailed conditions are as follows.

- · Tester model: AG-X-5
- · Test temperature: 23°C
- · Load cell capacity: 500N
- · Test speed: 5 mm/min
- · Measurement area: 0.5 ($cm^2$)
- · Distance between chucks: 10.0 mm
- · Shape of chuck portion: Flat (width: 50 mm; depth: 30 mm)

[Pressure-sensitive Adhesive Force]

In a case in which the film according to the second embodiment includes at least a base material layer and a pressure-sensitive adhesive layer, the pressure-sensitive adhesive force of the pressure-sensitive adhesive layer is preferably from 1.0 N/10 mm to 10.0 N/10 mm, more preferably from 2.0 N/10 mm to 7.0 N/10 mm, and still more preferably from 3.0 N/10 mm to 5.0 N/10 mm.
The pressure-sensitive adhesive force is measured in accordance with JIS Z 0237:2009.
The film according to the second embodiment may contain a pressure-sensitive adhesive. The pressure-sensitive adhesive may be contained in the pressure-sensitive adhesive layer.
As the pressure-sensitive adhesive, a known pressure-sensitive adhesive may be used, and examples thereof include acrylic resins and rubber. Further, as the pressure-sensitive adhesive, the pressure-sensitive adhesives described in PCT/JP2021/042848 may be used.

<Injection Step>

The injection step in the second embodiment is a step of injecting a polymerizable composition into the space described above.
An example of the injection step will be explained using FIG. 4.
FIG. 4 is a schematic diagram for explaining the injection step.
As shown in FIG. 4, in the njection step, a pressure-sensitive adhesive tape 113 is peeled to an extent such that an opening through which a polymerizable composition can be injected into a cavity 114 is formed, a polymerizable composition 120 is injected into the cavity 114 through the opening, and the opening is closed again with the pressure-sensitive adhesive tape 113.
The temperature in the injection step is preferably lower than or equal to 30°C, more preferably lower than or equal to 27°C, and still more preferably lower than or equal to 25°C.
The temperature in the injection step is preferably higher than or equal to 15°C, more preferably higher than or equal to 18°C, and still more preferably higher than or equal to 20°C.

<Polymerizable Composition>

The polymerizable composition according to the second embodiment is a composition containing a polymerizable monomer.

A cured material can be obtained by curing the polymerizable composition.

The polymerizable composition according to the second embodiment may be a polymerizable composition containing a polymerization catalyst and two or more different monomers for an optical material.

It is preferable that the polymerizable composition according to the second embodiment includes a polymerization catalyst and two or more different monomers for an optical material, has a content of the polymerization catalyst of from 0.015 parts by mass to 0.080 parts by mass with respect to a total of 100 parts by mass of the two or more different monomers for an optical material, and has a viscosity of from 10 mPa's to 200 mPa·s as measured by a B-type viscometer under conditions of 25°C and 60 rpm.

In the measurement of viscosity with a B-type viscometer at 25°C and 60 rpm, the rotor number is set to be 2.

The viscosity as measured by a B-type viscometer at 25°C and 60 rpm is the viscosity immediately before injecting the polymerizable composition into the space described above (also referred to as "casting viscosity").

(Monomer for Optical Material)

The polymerizable composition according to the second embodiment may include two or more different monomers for an optical material.

Details of the monomer for an optical material in the second embodiment, such as specific examples thereof, preferred specific examples thereof, and preferred modes of the total light transmittance, the haze, the refractive index, the shape of the optical material, and the like, are the same as the details of the monomer for an optical material in the first embodiment, such as specific examples thereof, preferred specific examples thereof, and preferred modes of the total light transmittance, the haze, the refractive index, and the like.

[Isocyanate Compound]

Details of the isocyanate compound in the second embodiment, such as specific examples, preferred specific examples, and preferred modes, are the same as the details of the isocyanate compound in the first embodiment, such as specific examples, preferred specific examples, and preferred modes.

[Active Hydrogen Compound]

Examples of the active hydrogen compound include a polythiol compound having two or more mercapto groups, a hydroxythiol compound containing one or more mercapto groups and one or more hydroxy groups, a polyol compound containing two or more hydroxy groups, and an amine compound.

As the active hydrogen compound, an oligomer of the above-described active hydrogen compound or a halogen substitution product (for example, a chlorine substitution product or a bromine substitution product) of the above-described active hydrogen compound may be used.

The active hydrogen compound may be used singly or in mixture of two or more thereof.

(Polythiol Compound Having Two or More Mercapto Groups)

Details of the polythiol compound having two or more mercapto groups in the second embodiment, such as specific examples, preferred specific examples, and preferred modes, are the same as details of the polythiol compound having two or more mercapto groups in the first embodiment, such as specific examples, preferred specific examples, and preferred modes.

(Hydroxythiol Compound Including One or More Mercapto Groups and One or More Hydroxy groups)

Details of the hydroxythiol compound containing one or more mercapto groups and one or more hydroxy groups in the second embodiment, such as specific examples, preferred specific examples, and preferred modes, are the same as details of the hydroxythiol compound containing one or more mercapto groups and one or more hydroxy groups in the first embodiment, such as specific examples, preferred specific examples, and preferred modes.

(Polyol Compound Containing Two or More Hydroxy groups)

Details of the polyol compound containing two or more hydroxy groups in the second embodiment, such as specific examples, preferred specific examples, and preferred modes, are the same as details of the polyol compound containing two or more hydroxy groups in the first embodiment, such as specific examples, preferred specific examples,

and preferred modes.

(Amine Compound)

Details of the amine compound in the second embodiment, such as specific examples, preferred specific examples, and preferred modes, are the same as details of the amine compound in the first embodiment, such as specific examples, preferred specific examples, and preferred modes.

Details of the active hydrogen compound in the second embodiment, such as preferred specific examples and preferred contents, are the same as details of the active hydrogen compound in the first embodiment, such as preferred specific examples and preferred contents.

<Polymerization Catalyst>

The polymerizable composition according to the second embodiment preferably includes at least one polymerization catalyst.

The polymerization catalyst is not particularly limited, and examples thereof include basic catalysts, organometal-based catalysts, zinc carbamate, ammonium salts, and sulfonic acid.

The polymerization catalyst may be used singly or in an appropriate combination of two or more thereof.

(Basic Catalyst)

Details of the basic catalyst in the second embodiment, for example, specific examples, preferred specific examples such as a compound represented by Formula (2) and a compound represented by Formula (3), preferred modes, preferred pKa values, and the definition of pKa value, are the same as details of the basic catalyst in the first embodiment, for example, specific examples, preferred specific examples, preferred modes, preferred pKa values, and the definition of pKa value.

(Organometal-based Catalyst)

Details of the organometal-based catalyst in the second embodiment, such as specific examples, preferred specific examples, and preferred modes, are the same as details of the organometal-based catalyst in the first embodiment, such as specific examples, preferred specific examples, and preferred modes.

Details of the polymerization catalyst in the second embodiment, such as specific examples, preferred specific examples, and preferred modes, are the same as details of the polymerization catalyst in the first embodiment, such as specific examples, preferred specific examples, and preferred modes.

From the viewpoint of favorably promoting a polymerization reaction, the content of the polymerization catalyst in the polymerizable composition according to the second embodiment is preferably greater than or equal to 0.015 parts by mass, more preferably greater than or equal to 0.020 parts by mass, and still more preferably greater than or equal to 0.030 parts by mass, with respect to a total of 100 parts by mass of two or more different monomers for an optical material.

From the viewpoint of improving handleability at the time of injecting the polymerizable composition into the mold, the content of the polymerization catalyst in the polymerizable composition according to the second embodiment is preferably less than or equal to 0.080 parts by mass, more preferably less than or equal to 0.060 parts by mass, and still more preferably less than or equal to 0.040 parts by mass, with respect to a total of 100 parts by mass of two or more different monomers for an optical material.

(Other Additives)

The polymerizable composition according to the second embodiment may include any additive.

Examples of the additive include a photochromic compound, an alcohol compound, a visible light-absorbing dye, an internal mold release agent, a bluing agent, and a UV absorber.

(Photochromic Compound)

A photochromic compound is a compound of which molecular structure changes reversibly when exposed to light at a specific wavelength, which, in turn, changes the light absorption characteristics (absorption spectrum) of the compound.

Details of the photochromic compound in the second embodiment, such as specific examples, preferred specific examples, and preferred modes, are the same as details of the photochromic compound in the first embodiment, such as

specific examples, preferred specific examples, and preferred modes.

Examples of the photochromic compound for use in the second embodiment include compounds of which absorption characteristics (absorption spectrum) change with respect to a light of a specific wavelength.

(Visible Light-Absorbing Dye)

Commercially available products of visible light-absorbing dyes may be used. Organic dye compounds are preferable. Specific examples thereof include porphyrin compounds and tetraazaporphyrin compounds. More specific examples of visible light-absorbing dyes include PD-3115 (manufactured by Yamamoto Chemicals Inc.).

(Internal Mold Release Agent)

Examples of the internal mold release agent include acidic phosphate esters. Examples of acidic phosphoric acid esters include phosphoric monoesters and phosphoric diesters, which may be used singly or in mixture of two or more thereof.

(Bluing Agent)

Examples of the bluing agent include those that have an absorption band in the wavelength range from orange to yellow in the visible light region and have the function of adjusting the hue of the optical material formed of a resin. More specifically, the scope of the bluing agent includes a substance exhibiting a blue to purple color.

(UV Absorber)

Details of specific examples, preferred specific examples, and preferred modes of the UV absorber in the second embodiment are the same as details of specific examples, preferred specific examples, and preferred modes of the UV absorber in the first embodiment.

(Alcohol Compound)

The polymerizable composition according to the second embodiment may include an alcohol compound.

Details of the alcohol compound in the second embodiment, such as specific examples, preferred specific examples, and preferred modes, are the same as details of the alcohol compound in the first embodiment, such as specific examples, preferred specific examples, and preferred modes.

The polymerizable composition according to the second embodiment preferably includes, in addition to the polymerization catalyst and the two or more different monomers for an optical material described above, at least one selected from the group consisting of a photochromic compound, an alcohol compound, and a visible light-absorbing dye, and more preferably includes at least one selected from the group consisting of a photochromic compound and an alcohol compound, and/or at least one selected from visible light-absorbing dyes.

(Viscosity)

From the viewpoint of reducing striae and reducing leaching of pressure-sensitive adhesive, the polymerizable composition according to the second embodiment has a viscosity as measured by a B-type viscometer under conditions of 25°C and 60 rpm of preferably higher than or equal to 10 mPa·s, more preferably higher than or equal to 15 mPa·s, still more preferably higher than or equal to 20 mPa·s, particularly preferably higher than or equal to 25 mPa·s, even more preferably higher than or equal to 35 mPa·s, and yet even more preferably higher than or equal to 40 mPa·s.

From the viewpoint of maintaining favorable handleability at the time of forming an optical material into a desired shape, the polymerizable composition according to the second embodiment has a viscosity as measured by a B-type viscometer under conditions of 25°C and 60 rpm of preferably lower than or equal to 200 mPa·s, more preferably lower than or equal to 150 mPa·s, and still more preferably lower than or equal to 100 mPa·s.

The viscosity as measured by a B-type viscometer under conditions of 25°C and 60 rpm is the viscosity immediately before injecting a polymerizable composition into the space described above (also referred to as "casting viscosity").

<Curing Step>

The curing step in the second embodiment is a step of curing a polymerizable composition injected into the space,

thereby obtaining a cured material.

Since the method of producing an optical member according to the second embodiment includes the curing step, a polymerizable composition can be polymerized, and an optical material can be produced.

(Degree of Polymerization)

If the curing step is carried out at 30°C, the degree of polymerization of the polymerizable composition is 15% or more.

As a result of the degree of polymerization being 15% or more, prismaticity and striae can be reduced in the obtained cured material.

If the curing step is carried out at 30°C, the degree of polymerization of the polymerizable composition is preferably higher than or equal to 15%.

If the curing step is carried out at 30°C, the degree of polymerization of the polymerizable composition is preferably lower than or equal to 75%.

When the degree of polymerization is lower than or equal to 75%, the polymerizable composition can be prevented from polymerizing in a state that lacks appropriate degree of sliding of the mold on the film surface at low temperatures. Therefore, the generation of polymerization wrinkles can be further reduced. Moreover, striae can also be reduced in the obtained cured material.

The above-described degree of polymerization is preferably lower than or equal to 65%, more preferably lower than or equal to 55%, and still more preferably lower than or equal to 45%.

In the method of producing an optical member according to the second embodiment, it is preferable that the film includes a pressure-sensitive adhesive layer, and that the degree of polymerization of the polymerizable composition is higher than or equal to 30% if the curing step is carried out at the leaching temperature of the pressure-sensitive adhesive layer; the degree of polymerization of the polymerizable composition if the curing step is carried out at the leaching temperature of the pressure-sensitive adhesive layer is more preferably higher than or equal to 35%, and still more preferably higher than or equal to 40%.

As a result of this feature, the white cloudiness of the cured material caused by leaching of the pressure-sensitive adhesive layer can be reduced.

In the method of producing an optical member according to the second embodiment, it is preferable that the film includes a pressure-sensitive adhesive layer, and that the degree of polymerization of the polymerizable composition is lower than or equal to 75% if the curing step is carried out at the leaching temperature of the pressure-sensitive adhesive layer; the degree of polymerization of the polymerizable composition if the curing step is carried out at the leaching temperature of the pressure-sensitive adhesive layer is more preferably lower than or equal to 65%, and still more preferably lower than or equal to 55%.

The leaching temperature means the temperature at which white cloudiness is visually detected in the course of curing that is performed after the polymerizable composition is injected into the space enclosed by the mold substrate and the film.

The degree of polymerization is measured by the following method.

Equipment used: DSC-60 Plus manufactured by Shimadzu Corporation
Cell used: Pressure-resistant cell ASSY, gold plated
Filling gas: Air
Measurement temperature conditions: Start temperature of 20°C, End temperature of 300°C

The formulated liquid after formulation is subjected to measurement under the foregoing conditions, and the total amount of heat generated is determined from the exothermic behavior, and is defined as the total reaction heat (A).

Next, the formulated liquid in the process of being polymerized by heating in the oven is sampled at a predetermined time. The total amount of heat generated is measured in the same manner, and is defined as the residual heat generation amount (B).

In the second embodiment, the degree of polymerization is determined from the following equation:

$$B/A \times 100 = \text{Degree of polymerization (\%)}$$

In the curing step, the curing time is preferably less than or equal to 40 hours.

In particular, in the curing step in the second embodiment, in a case in which the curing time is less than or equal to 40 hours, the amount of leaching of a pressure-sensitive adhesive tends to be significantly reduced, and the above-described white cloudiness, void, and the like can be reduced more favorably.

The curing time in the second embodiment means the length of time from the point of time when the temperature of the polymerizable composition reaches 30°C until the polymerizable composition is completely cured.
From the viewpoint of curability of the polymerizable composition, the curing time is preferably greater than or equal to 1 hour, and more preferably greater than or equal to 3 hours.
The maximum curing temperature in the curing step is preferably lower than or equal to 150°C, and more preferably lower than or equal to 130°C.
The maximum curing temperature in the curing step is preferably higher than or equal to 50°C, more preferably higher than or equal to 60°C, and still more preferably higher than or equal to 70°C.
In the curing step, a microwave irradiation step of irradiating the polymerizable composition with microwaves for a predetermined time may be provided, as necessary.

<Cured Material>

The cured material according to the second embodiment is a cured material of the polymerizable composition according to the second embodiment.
The cured material according to the second embodiment can be favorably used as an optical member.
The cured material according to the second embodiment preferably includes at least one selected from the group consisting of a photochromic compound and an alcohol compound.

<Optical Member>

The optical member according to the second embodiment is produced by the method of producing an optical member according to the second embodiment.
In the optical member according to the second embodiment, polymerization wrinkles on the outer peripheral face of the optical member are reduced, and prismaticity is reduced.
Usually, cured materials obtained by the single casting method have a non-uniform thickness in many cases, and the outer peripheral faces have bumps and dips and are not smooth.
In conventional practice, the non-uniformity in thickness and bumps and dips on the outer peripheral face have been removed by grinding.
In contrast, the optical member according to the second embodiment can be produced as a high-quality optical member having reduced prismaticity, with no or only a small amount of grinding for prism correction and removal of bumps and dips on the outer peripheral face of the optical member.
The method of producing an optical member according to the second embodiment can also be used in the double casting method, as described above. For example, an optical member including a second layer formed of the optical member (for example, a lens) according to the second embodiment and a first layer that is layered on the second layer and that is formed of an optical member $\alpha$ (for example, a lens) other than the optical member according to the second embodiment, can be obtained using the double casting method.
In this case, the second layer formed of the optical member (for example, a lens) according to the second embodiment may be placed on the back face side (the side of the lens that faces the eye).
In this case, the average thickness of the first layer may be greater than the average thickness of the second layer.
The first layer may include at least one selected from the group consisting of a photochromic compound, an alcohol compound, and a visible light-absorbing dye, or may include at least one selected from the group consisting of a photochromic compound and an alcohol compound and/or at least one selected from visible light-absorbing dyes.

(Prism Difference)

From the viewpoint of providing high quality through reduction of unevenness in thickness, the optical member according to the second embodiment has a prism difference of preferably less than or equal to 0.20 mm, more preferably less than or equal to 0.15 mm, and still more preferably less than or equal to 0.10 mm.
The prism difference is measured by the following method.
The thickness is measured at a total of five points that are: the center (i.e., areal center) of the optical member, two radius midpoints on a diameter line, and two radius midpoints on a line that orthogonally crosses the foregoing diameter line and that passes through the center of the optical member.
Next, the values of the thickness differences from the center thickness (also referred to as "thickness differences from the center") are calculated by subtracting the thickness at the center of the optical member from the thicknesses at the four points other than the center of the optical member. In other words, four values of the thickness differences from the center are obtained. The thickness difference from the center is a negative (-) value at a point at which the thickness is smaller than the thickness of the center, and is a positive (+) value at a point at which the thickness is larger than the

thickness of the center.

The minimum value of the obtained four thickness differences from the center is subtracted from the maximum value of the four thickness differences from the center, to calculate the maximum difference in thickness, which is used as the prism difference.

From the viewpoint of quality, the optical member according to the second embodiment is preferably free of striae having a length of 1.0 mm or more in a region within a radius of 15 mm from the center.

The optical member according to the second embodiment preferably has a stepped shape at a part of the outer periphery.

As an example, a case will be described in which: a film is bonded to outer peripheral faces of a pair of mold substrates that are arranged to face each other with a predetermined spacing therebetween, thereby forming a space enclosed by the pair of mold substrates and the film; and then a polymerizable composition is injected into the space; and then the polymerizable composition is cured. In this case, a part of the film bonded to the outer peripheral faces overlaps with another part of the film. Due to the presence of the overlapping portion, the optical member obtained will have a stepped shape formed at a part of the outer periphery thereof.

The stepped shape can be eliminated by moderate grinding.

<Use of Optical Member>

Details of the use of the optical member according to the second embodiment, such as specific examples and preferred specific examples, are the same as details of the use of the optical member according to the first embodiment, such as specific examples and preferred specific examples.

<Annealing Step>

Details of the annealing step in the second embodiment, such as specific modes and preferred modes, are the same as details of the annealing step in the first embodiment, such as specific modes and preferred modes.

Specific means according to the second embodiment include the following aspects.

<1B> A method of producing an optical member, including:

a space formation step of bonding a film to outer peripheral faces of mold substrates that are arranged to face each other with a predetermined spacing therebetween, thereby forming a space enclosed by the pair of mold substrates and the film;
an injection step of injecting a polymerizable composition into the space; and
a curing step of curing the polymerizable composition injected into the space, thereby obtaining a cured material, wherein the ratio of the heat-resistance index of the film measured under conditions of 30°C and 30 minutes to the heat-resistance index of the film measured under conditions of 20°C and 30 minutes is more than 0.1, and the degree of polymerization of the polymerizable composition is 15% or more if the curing step is carried out at 30°C.

<2B> The method of producing an optical member according to <1B>, wherein the degree of polymerization of the polymerizable composition is 75% or less if the curing step is carried out at 30°C.

<3B> The method of producing an optical member according to <1B> or <2B>, wherein the film includes a pressure-sensitive adhesive layer, and the degree of polymerization of the polymerizable composition is 30% or more if the curing step is carried out at a leaching temperature of the pressure-sensitive adhesive layer.

<4B> The method of producing an optical member according to any one of <1B> to <3B>, wherein the polymerizable composition includes a polymerization catalyst and two or more different monomers for an optical material, the content of the polymerization catalyst is from 0.015 parts by mass to 0.080 parts by mass with respect to a total of 100 parts by mass of the two or more different monomers for an optical material, and the polymerizable composition has a viscosity of from 10 mPa's to 200 mPa·s as measured by a B-type viscometer under conditions of 25°C and 60 rpm.

<5B> The method of producing an optical member according to <4B>, wherein the two or more different monomers for an optical material include at least one active hydrogen compound selected from the group consisting of a polythiol compound containing two or more mercapto groups, a hydroxythiol compound containing one or more mercapto groups and one or more hydroxy groups, a polyol compound containing two or more hydroxy groups, and an amine compound.

<6B> The method of producing an optical member according to <4B> or <5B>, wherein the two or more different monomers for an optical material include an isocyanate compound, and the isocyanate compound includes at least one selected from the group consisting of isophorone diisocyanate, 2,5-bis(isocyanatomethyl)bicyclo-[2.2.1]-heptane, 2,6-bis(isocyanatomethyl)bicyclo-[2.2.1]-heptane, m-xylylene diisocyanate, 2,4-tolylene diisocyanate, 2,6-tolylene diisocyanate, dicyclohexylmethane diisocyanate, 1,3-bis(isocyanatomethyl)cyclohexane, 1,4-bis(isocyanatomethyl)cyclohexane, 1,6-hexamethylene diisocyanate, and 1,5-pentamethylene diisocyanate.
<7B> The method of producing an optical member according to any one of <4B> to <6B>, wherein the polymerization catalyst includes at least one selected from the group consisting of an amine-based catalyst and an organotin-based catalyst.

## EXAMPLES

Hereinafter, one mode according to the first embodiment will be specifically described by reference to examples, but the first embodiment is not limited to these examples.
The method of measuring viscosity in the Examples is the same as the method described in the foregoing section for the first embodiment.
The method for heat-resistance index test in the Examples is the same as the method described in the foregoing section for the first embodiment.
The method of measuring tensile modulus of elasticity in the Examples is the same as the method described in the foregoing section for the first embodiment.
The method for glass ball tack test in the Examples is the same as the method described in the foregoing section for the first embodiment.
The method of measuring pressure-sensitive adhesive force in the Examples is the same as the method described in the foregoing section for the first embodiment.
The following evaluations were performed on the cured material (i.e., lens) obtained in each Example or Comparative Example.

[Prismaticity]

The prism difference is determined using the same method as that described above. The prismaticity of an optical member is evaluated based on the prism difference obtained.
When the prism difference is 0.25 mm or less, the prismaticity of the optical member is considered to be small.

[Remaining Glue]

After curing of the polymerizable composition was finished and the film (i.e., tape) was peeled off for separating the cured material from the mold and the resin substrate, it was visually checked whether or not tape glue remained on the mold and the resin substrate.
A case in which glue did not remain was ranked as A, and a case in which glue remained was ranked as B.

[Void]

It was visually checked whether or not void occurred in the cured material.
A case in which void did not occur was ranked as A, and a case in which void occured was ranked as B.

[Leakage]

After the polymerizable composition was injected, it was checked whether or not "monomer leakage", which refers to leakage of a monomer from the mold in the oven, occurred.
The amount of the monomer injected into the mold and the mass of the resin after polymerization were measured, and the proportion of the monomer that leaked from the mold in the oven after injection was defined as the monomer leakage ratio according to the following formula.
A case in which the monomer leakage ratio was 1% or less was ranked as A, and a case in which it was more than 1% was ranked as B.

$$\text{Monomer injection amount} = X\ (g)$$

$$\text{Resin mass after polymerization} = Y\ (g)$$

$$\text{Monomer leakage amount} = X - Y\ (g)$$

$$\text{Monomer leakage ratio} = (X - Y)/X \times 100\ (\%)$$

[White Cloudiness/Leaching]

It was visually checked whether or not white cloudiness or leaching of pressure-sensitive adhesive occurred in the cured material.

A case in which white cloudiness or leaching of pressure-sensitive adhesive was not detected was ranked as A, and a case in which white cloudiness or leaching of pressure-sensitive adhesive was detected was ranked as B.

[Haze]

The haze of a resin planar having a thickness of 9.0 mm as a cured material was measured using a haze meter (model number: NDH 2000) manufactured by NIPPON DENSHOKU INDUSTRIES Co., Ltd. It will be noted that a lower haze indicates a more favorable transparency as a lens.

[Photochromic Performance]

(a) Light Transmittance in Color Developed Period (T%max)

A 0.7-mm thick molded material sample as a cured material was irradiated for 15 minutes at a temperature of 23°C and an illuminance of 50,000 lux using a xenon lamp light source device, thereby causing color development, and the spectrum was continuously measured during the period. The light transmittance (T%max) at the maximum absorption wavelength (λmax) was determined for this period, from the spectrum that was taken 15 minutes after irradiation. A lower transmittance indicates deeper color development (i.e., better photochromic performance).

(b) Fading Half-Life (F1/2):

After 15 minutes of color development, light irradiation was stopped, and the spectrum of the above-described cured material (molded material sample) was continuously measured for another 15 minutes. The time required for the absorbance at λmax of the molded material sample to return to the midpoint value between the absorbance before color development and absorbance after color development is determined from the spectral data, and the midpoint value is defined as the fading half-life (F1/2). A shorter fading half-life (F1/2) indicates a faster fading speed (i.e., better photochromic performance).

- Light source device: MS-35AAF/FB (Ushio Inc.)
- Lamp: Xenon lamp UXL-300SX2 (Ushio Inc.)
- Spectrometer: Instantaneous multi-photometering system MSPD-7700 (Otsuka Electronics Co., Ltd.)

<Film>

The films used in Examples are as follows.

A: SCOTCH (registered trademark) *Atodehagaseru-tape* (Removable tape) 821-3-24 (manufactured by 3M Japan Limited)
B: Can sealing tape for packaging (non-polyvinylchloride type) No. 33T (manufactured by Nitto Denko Corporation)
C: Can sealing vinyl tape for packaging No. 23S (manufactured by Nitto Denko Corporation)
D: 6263-73 (manufactured by Maxell Sliontec Ltd.)

Details of each film are indicated in Table 1.

(Examples 1A to 3A and Comparative Example 1A)

<Preparation of Resin Substrate>

A mixed solution was prepared by charging 0.008 parts by mass of dibutyltin(II) dichloride, 0.1 parts by mass of an internal mold release agent for MR manufactured by Mitsui Chemicals, Inc., 0.6 parts by mass of TINUVIN 329 as a UV absorber, 0.6 parts by mass of SEESORB 709 as a UV absorber, and 50.7 parts by mass m-xylylene diisocyanate. This mixed solution was stirred at 25°C for 1 hour for complete dissolution. Subsequently, to this formulated liquid, 49.3 parts by mass of a mixture of 5,7-dimercaptomethyl-1, 11-dimercapto-3,6,9-trithiaundecane, 4,7-dimercaptomethyl-1, 11-dimercapto-3,6,9-trithiaundecane, and 4,8-dimercaptomethyl-1,11-dimercapto-3,6,9-trithiaundecane was added, and the resultant was stirred at 25°C for 30 minutes, to obtain a homogenous solution. This solution was defoamed at 400 Pa for 1 hour, filtered through a 1 μm PTFE filter, and then poured into a flat glass mold. This glass mold was heated from 25°C to 120°C over 20 hours. After cooling to room temperature, the product was removed from the glass mold, to obtain a planar lens. Further, the obtained planar lens was annealed at 120°C for 2 hours, to obtain a molded material (lens) having the thickness of the center and the base curve indicated in Table 1.
The molded material obtained is used as a resin substrate.

<Preparation of Polymerizable Composition>

A master liquid was prepared in advance by dissolving 0.02 parts by mass of REVERSACOL Wembley Grey manufactured by Vivimed Labs Ltd., 0.02 parts by mass of REVERSACOL Jalapeno Red manufactured by Vivimed Labs Ltd., 0.02 parts by mass of Reversacol Marine Blue manufactured by Vivimed Labs Ltd., 0.05 parts by mass of REVERSACOL Adriatic Blue manufactured by Vivimed Labs Ltd., and 0.08 parts by mass of REVERSACOL Mendip Green manufactured by Vivimed Labs Ltd. as photochromic compounds and 0.075 parts by mass of HOSTAVIN PR-25 as a UV absorber, in 9.73 parts by mass of a composition containing 2,5-bis(isocyanatomethyl)bicyclo-[2.2.1]-heptane and 2,6-bis(isocyanatomethyl)bicyclo-[2.2.1]-heptane.
10 parts by mass of the master liquid obtained was added to 30.28 parts by mass of a composition containing 2,5-bis(isocyanatomethyl)bicyclo-[2.2.1]-heptane and 2,6-bis(isocyanatomethyl)bicyclo-[2.2.1]-heptane, the resultant liquid was stirred, 2.52 parts by mass of ADEKA Pluronic L-64 manufactured by ADEKA CORPORATION, 0.4 parts by mass of Polyflow KL-100 manufactured by KYOEISHA CHEMICAL Co., LTD., and 0.05 parts by mass of JP-506H manufactured by Johoku Chemical Co., Ltd. as acidic phosphoric acid ester were added thereto, and stirred between 15°C and 20°C for 30 minutes, to obtain a mixed liquid (mixing step A).
To the mixed liquid obtained by mixing step A, 19.97 parts by mass of pentaerythritol tetrakis(3-mercaptopropionate) and 27.23 parts by mass of 4-mercaptomethyl-1,8-dimercapto-3,6-dithiaoctane were added and stirred between 15°C and 20°C for 15 minutes, to obtain a mixed liquid (mixing step B).
To 10 parts by mass of a composition containing 2,5-bis(isocyanatomethyl)bicyclo-[2.2.1]-heptane and 2,6-bis(isocyanatomethyl)bicyclo-[2.2.1]-heptane, 0.015 parts by mass of dimethyltin dichloride was added and dissolved uniformly, thereby preparing a solution.
This solution was added to the mixed liquid obtained by mixing step B, followed by stirring at from 15°C to 20°C for 15 minutes, to obtain a polymerizable composition.

<Preparation of Cured Material>

A cast-molding mold was prepared by attaching the film (which may be tape) indicated in Table 1 to the outer peripheral faces of a mold substrate and the resin substrate arranged to face each other with a predetermined spacing therebetween, thereby forming a space enclosed by the mold substrate, the resin substrate, and the film. The distance between the mold substrate and the resin substrate (i.e., the space portion) at the center of the lens was set to 0.8 mm.
The polymerizable composition obtained was injected into the above-described space at a rate of 6 g/sec while the polymerizable composition was mixed again in a static mixer.
The viscosity (also referred to as casting viscosity) of the polymerizable composition when the polymerizable composition was fed to the mold and cast was adjusted to the value indicated in Table 1.
The cast material was heated in an oven at the temperature indicated in Table 1 for the time indicated in Table 1, to perform polymerization.
The cured material was released from the cast-molding mold, and, further, annealed at 120°C for 2 hours, to obtain a cured material (lens).
The cured materials (lenses) obtained in Examples 1A to 3A had no stria having a length of 1.0 mm or more in a region within a radius of 15 mm from the center.
In addition, the cured materials (lenses) obtained in Examples 1A to 3A had a stepped shape at a part of the outer

periphery of the second layer (i.e., the resin substrate layer).

Table 1

| | | | | Example 1A | Example 2A | Example 3A | Comparative Example 1A |
|---|---|---|---|---|---|---|---|
| Film | Type | | | A | B | C | D |
| | Base material layer | Type | | Acetate resin | Polyolefin | Semirigid vinyl chloride | Special polypropylene |
| | Pressure-sensitive adhesive layer | Type | | Acrylic resin | Rubber | Rubber | Acrylic resin |
| | Thickness | | µm | 58 | 80 | 100 | 65 |
| | Width | | mm | 18.0 | 18.0 | 18.0 | 19.4 |
| | Tensile modulus | | $\times 10^{10}$pa at 80°C | 10.7 | 4.32 | 1.92 | 11.4 |
| | Glass ball tack test | | mm (30° at 25°C) | 111 | 27 | 5.6 | 41 |
| | Glass ball tack test | | mm (30° at 80°C) | 200 or more | 27 | 200 or more | 42 |
| | Glass ball tack test | | mm (30° at 120°C) | 200 or more | 23 | 200 or more | 38 |
| | Pressure-sensitive adhesive force (to glass) | | N/10mm | 2.7 | 4.7 | 0.83 | 0.68 |
| | Heat-resistance index test (50°C) | | Tape detachment time | Not detached even after 5 minutes | Not detached even after 5 minutes | 10 sec | 2 min |
| | | | Stretch ratio (%) | 0 | 47 | 8 | 0 |
| Production method | | Viscosity of polymerizable composition | mPa·S | 48.5 | | | |
| | | Resin substrate (back side) | Thickness of the center (mm) | 9.51 | 9.54 | 9.56 | 9.55 |
| | | | Base curve | 4CB | | | |
| | | Cured material (front side) | Thickness (mm) | 0.64 | 0.64 | 0.64 | 0.7 |
| | | Curing time | hour | 16.5 | | | |
| | | Maximum temperature during curing | °C | 120 | | | |

(continued)

| | | | Example 1A | Example 2A | Example 3A | Comparative Example 1A |
|---|---|---|---|---|---|---|
| Evaluation of cured material | Prism difference (mm) | | 0.22 | 0.16 | 0.24 | 0.30 |
| | Remaining glue | Lens | B | A | B | A |
| | | Mold | B | A | B | A |
| | Void (foam) | | A | A | A | B |
| | Leakage | | A | A | A | B |
| | White cloudiness / Leaching | | A | A | A | A |

As shown in Table 1, the prism differences in the optical members obtained were 0.25 mm or less in the Examples using the method of producing an optical member, the method including:

a space formation step of bonding a film to outer peripheral faces of a mold substrate and a resin substrate that are arranged to face each other with a predetermined spacing therebetween, thereby forming a space enclosed by the mold substrate, the resin substrate, and the film;
an injection step of injecting a polymerizable composition into the space; and
a curing step of curing the polymerizable composition injected into the space, thereby obtaining a cured material, wherein the film satisfies at least one of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

As a result, optical members having reduced prismaticity could be produced. The optical members also had excellent results with respect to the leakage and the white cloudiness/leaching.
Meanwhile, the optical member obtained exhibited a prism difference of more than 0.25 mm in Comparative Example 1A, which used a film that satisfied neither of the conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%. Therefore, an optical member having reduced prismaticity could not be produced.

Among the foreging Examples, in Example 2A, the optical member obtained exhibited a significantly small prism difference, and, therefore, an optical member in which prismaticity was more favorably suppressed could be produced. Example 2A used a film that satisfied both the conditions:

(i) in a case in which the film is bonded to the resin substrate and subjected to a heat-resistance index test at 50°C for 3 minutes, the film does not detach from the resin substrate, and

(ii) in a case in which the film is bonded to the resin substrate and subjected to a heat-resistance index test at 50°C for 3 minutes, the film exhibits a stretch ratio of more than 0%.

Further, Example 2A exhibited excellent results with respect to all of the remaining glue, the void, the leakage, and the white cloudiness/leaching.
Next, at the center of the cured material (lens) obtained in Example 2A, the haze (%) of the first layer, the thickness (mm) of the first layer, the haze (%) of the second layer, and the thickness (mm) of the second layer were measured. The value H1 (%/mm), which is a value obtained by dividing the haze (%) of the first layer by the thickness (mm) of the first layer, and the value H2 (%/mm), which is a value obtained by dividing the haze (%) of the second layer by the thickness (mm) of the second layer, were determined based on the measurement results.
As a result, the value H1 was 0.069%/mm, and the value H2 was 0.052%/mm. It was confirmed that the value H1

was higher than the value H2.

In addition, the ratio of value H1 to value H2 was 1.327 (=0.069/0.052).

The photochromic performance of the cured material (lens) obtained in Example 2A was evaluated. The light transmittance in the color-developed period was 20% or less with a deep color developed, and the fading half-life (F1/2) was 60 seconds or less, indicating a high fading speed. It was confirmed that a cured material (lens) with an excellent photochromic performance was obtained.

Hereinafter, one mode according to the second embodiment will be specifically described by reference to examples, but the second embodiment is not limited to these examples.

The method of measuring viscosity in the Examples is the same as the method described in the foregoing section for the second embodiment.

The method for heat-resistance index test in the Examples is the same as the method described in the foregoing section for the second embodiment.

The method of measuring the tensile modulus of elasticity in the Examples is the same as the method described in the foregoing section for the second embodiment.

The following evaluations were performed on the cured material (i.e., lens) obtained in each Example or Comparative Example.

[Prismaticity]

The prism difference was measured using the same method as that described above. The prismaticity of an optical member was evaluated based on the prism difference obtained.

When the prism difference is 0.20 mm or less, the prismaticity of the optical member is considered to be small.

[Polymerization Wrinkles]

Immediately after curing of the polymerizable composition was finished and the cured material was taken out from the mold, the presence or absence of polymerization wrinkles on the side faces of the cured material (i.e., polymerization shrinkage marks) was visually checked.

A case in which unevenness with an average depth of 0.4 mm or more was detected in the outer peripheral face was ranked as B, and a case in which such unevenness was not detected was ranked as A.

[Remaining Glue]

After curing of the polymerizable composition was finished and the film (i.e., tape) was peeled off for separating the cured material from the mold, it was visually checked whether or not tape glue remained on the mold and the cured material.

A case in which glue did not remain was ranked as A, and a case in which glue remained was ranked as B.

[Void]

It was visually checked whether or not void occurred in the cured material.

A case in which void did not occur was ranked as A, and a case in which void occurred was ranked as B.

[Leakage]

After the polymerizable composition was injected, it was checked whether or not "monomer leakage", which refers to leakage of a monomer from the mold in the oven, occurred.

The amount of the monomer injected into the mold and the mass of the resin after polymerization were measured, and the proportion of the monomer that leaked from the mold in the oven after injection was defined as the monomer leakage ratio according to the following formula.

A case in which the monomer leakage ratio was 1% or less was ranked as A, and a case in which it was more than 1% was ranked as B.

$$\text{Monomer injection amount} = X\ (g)$$

$$\text{Resin mass after polymerization} = Y\ (g)$$

$$\text{Monomer leakage amount} = X - Y\ (g)$$

$$\text{Monomer leakage ratio} = (X - Y)/X \times 100\ (\%)$$

[White cloudiness/Leaching]

It was visually checked whether or not white cloudiness or leaching of pressure-sensitive adhesive occurred in the cured material.

A case in which white cloudiness or leaching of pressure-sensitive adhesive was not detected was ranked as A, and a case in which white cloudiness or leaching of pressure-sensitive adhesive was detected was ranked as B.

<Film>

The films used in the Examples are as follows.

A: KC2 (manufactured by Youngwoo Co., Ltd.)
B: YT-7107C (manufactured by Youngwoo Co., Ltd.)
C: 6263-00 (manufactured by Maxell Sliontec Ltd.)
D: 6263-73 (manufactured by Maxell Sliontec Ltd.)

Details of each film are indicated in Table 2.

<Preparatioin of Polymerizable Composition>

A mixed liquid was obtained by adding 0.125 parts by mass of ZELEC-UN and 0.05 parts by mass of VIOSORB 583 to 50.6 parts by mass of a composition containing 2,5-bis(isocyanatomethyl)bicyclo-[2.2.1]-heptane and 2,6-bis(isocyanatomethyl)bicyclo-[2.2.1]-heptane, followed by stirring at from 10°C to 20°C for from 10 to 20 minutes (mixing step A).

To the mixed liquid obtained by mixing step A, 23.9 parts by mass of pentaerythritol tetrakis(3-mercaptopropionate) was added, and stirred at from 10°C to 20°C for 10 to 20 minutes, to obtain a mixed liquid (mixing step B).

0.03 parts by mass of dimethyltin dichloride was added to 25.5 parts by mass of 4-mercaptomethyl-1,8-dimercapto-3,6-dithiaoctane, and uniformly dissolved, to prepare a solution. This solution was added to the mixed liquid obtained by mixing step B, followed by stirring at from 10°C to 20°C for 10 to 20 minutes, to obtain a polymerizable composition.

[Examples 1B to 3B and Comparative Examples 1B to 3B]

<Preparation of Cured Material>

A cast-molding mold was prepared by attaching the film (which may be tape) indicated in Table 2 to the outer peripheral faces of a pair of mold substrates arranged to face each other with a predetermined spacing therebetween, thereby forming a space enclosed by the pair of mold substrates and the film.

The polymerizable composition obtained was injected into the above-described space at a rate of 6 g/sec while the polymerizable composition was mixed again in a static mixer.

The viscosity (also referred to as casting viscosity) of the polymerizable composition when the polymerizable composition was fed to the mold and cast was adjusted to the value indicated in Table 2.

The cast material was heated in an oven at the temperature indicated in Table 2 for the time indicated in Table 2, to perform polymerization.

The cured material was released from the cast-molding mold, and, further, annealed at 120°C for 2 hours, to obtain a cured material (lens).

Table 2

| | | | | Example 1B | Example 2B | Example 3B | Comparative Example 1B | Comparative Example 2B | Comparative Example 3B |
|---|---|---|---|---|---|---|---|---|---|
| Film (tape) | As a whole | Type | | A | B | C | D | A | B |
| | | Heat-resistance index at 20°C, 30 min | mm | 0.2 | 0.15 | 0 | 0 | 0.2 | 0.15 |
| | | Heat-resistance index at 20°C, 30 min | mm | 0.5 | 1 | 0.2 | 0.1 | 0.5 | 1 |
| | | Heat-resistance index ratio | Heat-resistance index 30°C/ Heat-resistance index 20°C | 2.5 | 6.7 | 0.2 | 0.1 | 2.5 | 6.7 |
| | | Thickness | μm | 60 | 70 | 60 | 65 | 60 | 70 |
| | | Width | mm | 25.2 | 30.4 | 20.2 | 19.4 | 25.2 | 30.4 |
| | | Tensile modulus | $\times 10^{10}$pa at 80°C | 4.8 | 12.3 | 3.8 | 11.4 | 4.8 | 12.3 |
| Production method | | Degree of polymerization at 30°C | % | 20.0% | | | | 10.0 | |
| | | Degree of polymerization at leaching temperature (60°C) of pressure-sensitive adhesive layer of film | % | 40.0% | | | | 25.0% | |
| | | Curing time | hour | 38 | | | | 16 | |
| | | Maximum temperature during curing | °C | 120 | | | | | |
| | | Casting viscosity of polymerizable composition | mPa-S | 20 | 20 | 20 | 20 | 20 | 20 |
| Evaluation | | Prismaticity (maximum thickness unevenness) | mm | 0.047 | 0.051 | 0.066 | 0.208 | 0.231 | 0.246 |
| | | Polymerization wrinkles | | A | A | A | B | A | A |
| | | Remaining glue | Lens | A | A | A | A | A | A |
| | | | Mold | A | A | A | A | A | A |
| | | Void (foam) | | A | A | A | A | A | A |
| | | Leakage | | A | A | A | A | A | A |
| | | White cloudiness/Leaching | | A | A | A | A | B | B |

As shown in Table 2, optical members with reduced polymerization wrinkles on the outer peripheral faces and reduced prismaticity could be produced in the Examples using the method of producing an optical member, the method including:

a space formation step of bonding a film to outer peripheral faces of a pair of mold substrates that are arranged to face each other with a predetermined spacing therebetween, thereby forming a space enclosed by the pair of mold substrates and the film;
an injection step of injecting a polymerizable composition into the space; and
a curing step of curing the polymerizable composition injected into the space, thereby obtaining a cured material,
wherein the ratio (also referred to as "heat-resistance index ratio") of the heat-resistance index of the film measured under conditions of 30°C and 30 minutes to the heat-resistance index of the film measured under conditions of 20°C and 30 minutes is more than 0.1, and the degree of polymerization of the polymerizable composition is 15% or more if the curing step is carried out at 30°C.

In contast, in Comparative Example 1B, in which the heat-resistance index ratio was not more than 0.1, inferior results were obtained in the evaluation of prismaticity and polymerization wrinkles; thus, polymerization wrinkles on the outer peripheral face of the optical member could not be suppressed, and the prismaticity could not be reduced, either.
In Comparative Examples 2B and 3B, in which the degree of polymerization of the polymerizable composition at 30°C was less than 15%, inferior results were obtained in the evaluation of prismaticity, and prismaticity could not be reduced.
The disclosures of Japanese Patent Application No. 2022-028598, filed February 25, 2022, and Japanese Patent Application No. 2022-120906, filed July 28, 2022, are incorporated herein by reference in their entirety.
All publications, patent applications, and technical standards mentioned in this specification are incorporated herein by reference to the same extent as if each individual publication, patent application, or technical standard were specifically and individually indicated to be incorporated by reference.

Explanation of Reference Signs

| | |
|---|---|
| 10 | Lens cast-molding polymerization mold |
| 11 | Mold substrate |
| 12 | Resin substrate |
| 13 | Film (pressure-sensitive adhesive tape) |
| 14 | Space (cavity) |
| 20 | Polymerizable composition |
| 110 | Lens cast-molding polymerization mold |
| 111 | Mold substrate for convex face formation |
| 112 | Mold substrate for concave face formation |
| 113 | Film (pressure-sensitive adhesive tape) |
| 114 | Space (cavity) |
| 120 | Polymerizable composition |

**Claims**

**1.** A method of producing an optical member, comprising:

a space formation step of bonding a film to outer peripheral faces of a mold substrate and a resin substrate that are arranged to face each other with a predetermined spacing therebetween, thereby forming a space enclosed by the mold substrate, the resin substrate, and the film;
an injection step of injecting a polymerizable composition into the space; and
a curing step of curing the polymerizable composition injected into the space, thereby obtaining a cured material,
wherein the film satisfies at least one of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

2. The method of producing an optical member according to claim 1, wherein the film satisfies both of the following conditions:

(i) in a case in which the film is bonded to the resin substrate and subjected to a heat-resistance index test at 50°C for 3 minutes, the film does not detach from the resin substrate, and
(ii) in a case in which the film is bonded to the resin substrate and subjected to a heat-resistance index test at 50°C for 3 minutes, the film exhibits a stretch ratio of more than 0%.

3. The method of producing an optical member according to claim 1, wherein, in a case in which a glass ball tack test is performed at 80°C using the film, a glass ball movement distance is 200 mm or less.

4. The method of producing an optical member according to claim 1, wherein the polymerizable composition includes a polymerization catalyst and two or more different monomers for an optical material, a content of the polymerization catalyst is from 0.01 parts by mass to 0.1 parts by mass with respect to a total of 100 parts by mass of the two or more different monomers for an optical material, and the polymerizable composition has a viscosity of from 30 mPa s to 1000 mPa·s as measured by a B-type viscometer under conditions of 25°C and 60 rpm.

5. The method of producing an optical member according to claim 4, wherein the polymerizable composition includes at least one selected from the group consisting of a photochromic compound, an alcohol compound, and a visible light-absorbing dye.

6. The method of producing an optical member according to claim 4, wherein the two or more different monomers for an optical material include an isocyanate compound and an active hydrogen compound that is at least one selected from the group consisting of a polythiol compound containing two or more mercapto groups, a hydroxythiol compound containing one or more mercapto groups and one or more hydroxy groups, a polyol compound containing two or more hydroxy groups, and an amine compound.

7. An optical member, comprising:
a first layer and a second layer, wherein:

an average thickness of the second layer is greater than an average thickness of the first layer,
the first layer contains at least one selected from the group consisting of a photochromic compound, an alcohol compound, and a visible light-absorbing dye, and
the optical member has a prism difference of 0.25 mm or less, and no stria having a length of 1.0 mm or more is present in a region within a radius of 15 mm from a center of the optical member.

8. The optical member according to claim 7, wherein the second layer has a stepped shape at a part of an outer periphery of the second layer.

9. The optical member according to claim 7, wherein a value H1, which is a value obtained by dividing a haze of the first layer by a thickness of the first layer, is higher than a value H2, which is a value obtained by dividing a haze of the second layer by a thickness of the second layer, at a center of the optical material.

10. The optical member according to claim 9, wherein a ratio of the value H1 to the value H2 is from 1.001 to 1.500.

11. A method of producing an optical member, comprising:

a space formation step of bonding a film to outer peripheral faces of a pair of mold substrates that are arranged to face each other with a predetermined spacing therebetween, thereby forming a space enclosed by the pair of mold substrates and the film;
an injection step of injecting a polymerizable composition into the space; and
a curing step of curing the polymerizable composition injected into the space, thereby obtaining a cured material,
wherein a ratio of a heat-resistance index of the film measured under conditions of 30°C and 30 minutes to a heat-resistance index of the film measured under conditions of 20°C and 30 minutes is more than 0.1, and a degree of polymerization of the polymerizable composition is 15% or more if the curing step is carried out at 30°C.

12. The method of producing an optical member according to claim 11, wherein the degree of polymerization of the polymerizable composition is 75% or less if the curing step is carried out at 30°C.

13. The method of producing an optical member according to claim 11, wherein the film includes a pressure-sensitive adhesive layer, and the degree of polymerization of the polymerizable composition is 30% or more if the curing step is carried out at a leaching temperature of the pressure-sensitive adhesive layer.

14. The method of producing an optical member according to claim 11, wherein the polymerizable composition includes a polymerization catalyst and two or more different monomers for an optical material, a content of the polymerization catalyst is from 0.015 parts by mass to 0.080 parts by mass with respect to a total of 100 parts by mass of the two or more different monomers for an optical material, and the polymerizable composition has a viscosity of from 10 mPa·s to 200 mPa·s as measured by a B-type viscometer under conditions of 25°C and 60 rpm.

15. The method of producing an optical member according to claim 14, wherein the two or more different monomers for an optical material include at least one active hydrogen compound selected from the group consisting of a polythiol compound containing two or more mercapto groups, a hydroxythiol compound containing one or more mercapto groups and one or more hydroxy groups, a polyol compound containing two or more hydroxy groups, and an amine compound.

16. The method of producing an optical member according to claim 14, wherein the two or more different monomers for an optical material include an isocyanate compound, and the isocyanate compound includes at least one selected from the group consisting of isophorone diisocyanate, 2,5-bis(isocyanatomethyl)bicyclo-[2.2.1]-heptane, 2,6-bis(isocyanatomethyl)bicyclo-[2.2.1]-heptane, m-xylylene diisocyanate, 2,4-tolylene diisocyanate, 2,6-tolylene diisocyanate, dicyclohexylmethane diisocyanate, 1,3-bis(isocyanatomethyl)cyclohexane, 1,4-bis(isocyanatomethyl)cyclohexane, 1,6-hexamethylene diisocyanate, and 1,5-pentamethylene diisocyanate.

17. The method of producing an optical member according to claim 14, wherein the polymerization catalyst includes at least one selected from the group consisting of an amine-based catalyst and an organotin-based catalyst.

FIG.1

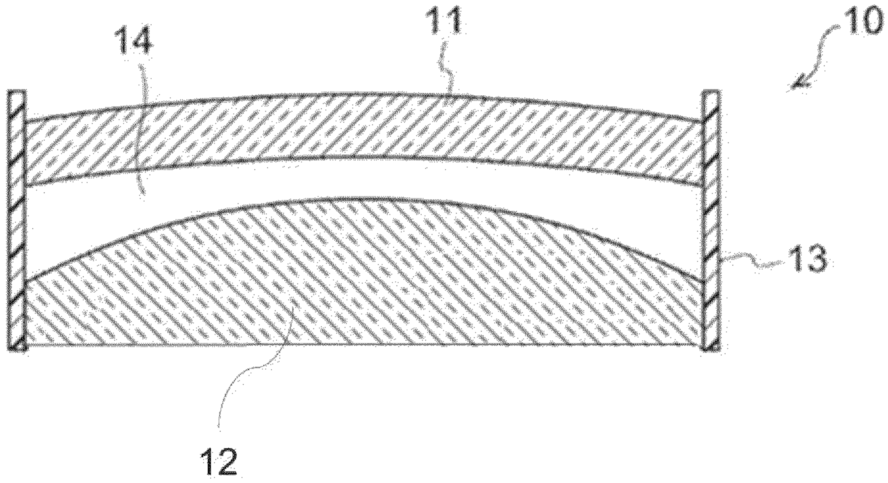


FIG.2

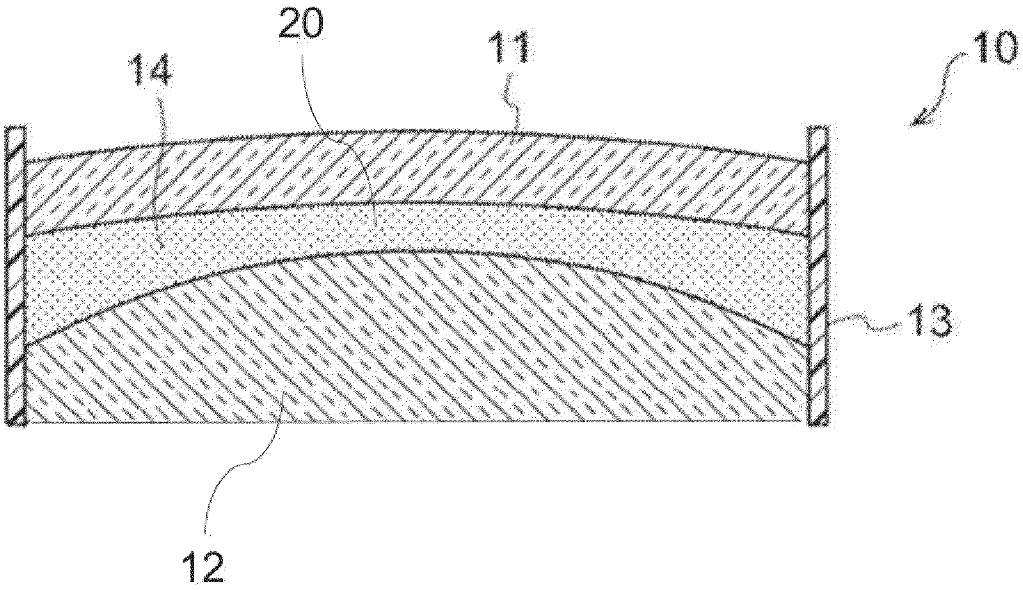

FIG.3

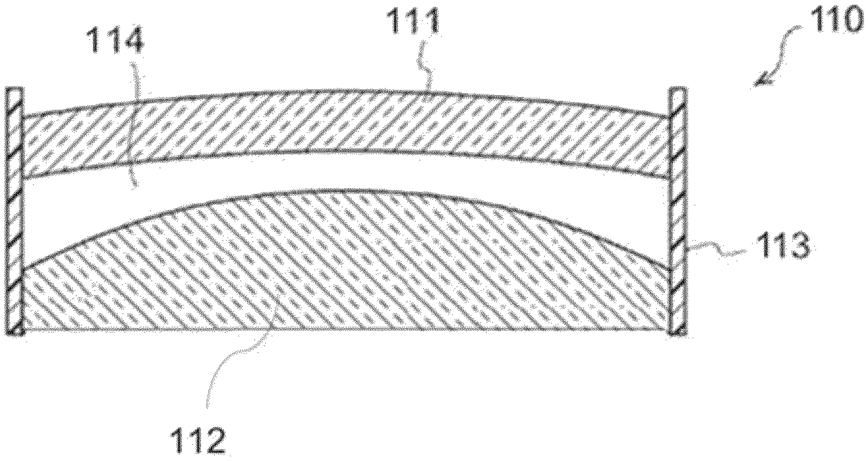


FIG.4

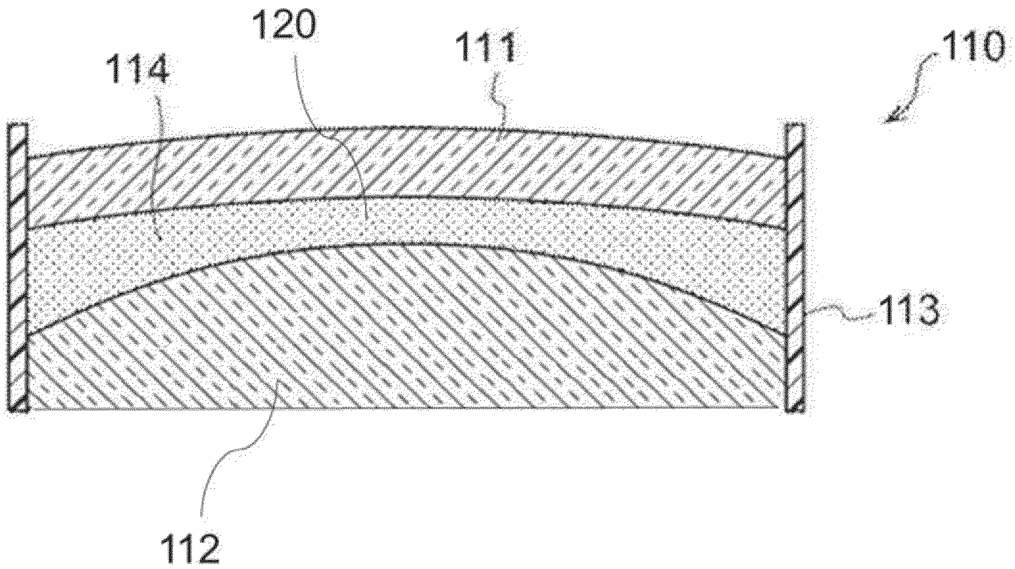

**INTERNATIONAL SEARCH REPORT**

International application No. **PCT/JP2023/007165**

**A. CLASSIFICATION OF SUBJECT MATTER**

***B29C 39/02***(2006.01)i; ***B29C 39/24***(2006.01)i; ***B29C 39/26***(2006.01)i; ***G02C 7/00***(2006.01)i; ***C08G 18/38***(2006.01)i; ***B29C 33/38***(2006.01)i; ***G02B 1/04***(2006.01)i; ***G02B 3/00***(2006.01)i
FI: G02B1/04; B29C39/02; B29C39/24; B29C33/38; G02C7/00; C08G18/38 076; G02B3/00 Z; B29C39/26

According to International Patent Classification (IPC) or to both national classification and IPC

**B. FIELDS SEARCHED**

Minimum documentation searched (classification system followed by classification symbols)

B29C39/02; B29C39/24; B29C39/26; G02C7/00; C08G18/38; B29C33/38; G02B1/04; G02B3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-132783 A (ASAHI LITE OPTICAL CO LTD) 12 June 2008 (2008-06-12) paragraph [0019] | 1-6, 11-17 |
| X | JP 2008-33223 A (HOYA CORP) 14 February 2008 (2008-02-14) paragraphs [0001], [0015], [0079]-[0084], fig. 1 | 7-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/007165**

| Patent document cited in search report | Publication date (day/month/year) | Patent family member(s) | Publication date (day/month/year) |
| --- | --- | --- | --- |
| JP 2008-132783 A | 12 June 2008 | US 2004/0188873 A1<br>paragraph [0026] | |
| JP 2008-33223 A | 14 February 2008 | US 2009/0316246 A1<br>paragraphs [0004]-[0009], [0148]-[0158], fig. 1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019162848 A
- JP 2012196933 A
- JP 2012196934 A
- JP 2002248636 A
- JP 2021042848 W
- WO 2011055540 A
- WO 2016125736 A
- WO 2009146509 A
- WO 201020770 A
- WO 2012149599 A
- WO 2012162725 A
- WO 2017047684 A
- WO 2015037628 A
- JP 2022028598 A
- JP 2022120906 A


### Non-patent literature cited in the description


- *The Journal of Physical Chemistry*, 1964, vol. 68 (6), 1560
- Chemical Handbook. Maruzen Publishing Co., Ltd., 25 June 1984
- **P. ALEXANDRIDIS** ; **T.A. HATTON**. *Colloids Surfaces A: Physicochem. Eng. Aspects*, 1995, vol. 96, 1-46